(19) Europäisches Patentamt
European Patent Office
Office européen des brevets

(11) **EP 4 459 173 A1**

(12) **EUROPÄISCHE PATENTANMELDUNG**

(43) Veröffentlichungstag:
**06.11.2024  Patentblatt 2024/45**

(21) Anmeldenummer: **24172353.5**

(22) Anmeldetag: **25.04.2024**

(51) Internationale Patentklassifikation (IPC):
**F17C 7/00** *(2006.01)*    **F02M 21/02** *(2006.01)*

(52) Gemeinsame Patentklassifikation (CPC):
**F17C 7/00;** F02M 21/0206; F17C 2221/012;
F17C 2223/0123; F17C 2223/036; F17C 2227/04;
F17C 2250/032; F17C 2250/043; F17C 2250/0636;
F17C 2250/077; F17C 2260/02; F17C 2265/022;
F17C 2265/066; F17C 2270/0168

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **05.05.2023   DE 102023111786**

(71) Anmelder: **Liebherr-France SAS
68005 Colmar Cedex (FR)**

(72) Erfinder: **CONREAUX, Adrien
68920 Wintzenheim, (FR)**

(74) Vertreter: **Laufhütte, Dieter
Lorenz Seidler Gossel
Rechtsanwälte Patentanwälte
Partnerschaft mbB
Widenmayerstraße 23
80538 München (DE)**

(54) **GASSPEICHERVORRICHTUNG UND VERFAHREN ZUR VERSORGUNG EINES VERBRAUCHERS MIT UNTERSCHIEDLICHEN GASDRUCKNIVEAUS**

(57)    Die Erfindung betrifft eine Speichervorrichtung zur Speicherung eines Gases und Versorgung eines Verbrauchers mit unterschiedlichen Gasdruckniveaus, umfassend mindestens einen Niederdruckspeicher und mindestens einen Hochdruckspeicher. Erfindungsgemäß ist der Niederdruckspeicher über ein schaltbares erstes Ventil mit einem Niederdruckanschluss und der Hochdruckspeicher über ein schaltbares zweites Ventil mit einem Hochdruckanschluss verbunden, wobei über den Hochdruckanschluss einem angeschlossenen Verbraucher ein höheres Gasdruckniveau bereitstellbar ist als über den Niederdruckanschluss. Der Niederdruckanschluss und der Hochdruckanschluss sind über ein schaltbares drittes Ventil miteinander verbunden. Ferner sind der Niederdruckspeicher und der Hochdruckspeicher über ein viertes Ventil miteinander verbunden. Die Ventile sind derart schaltbar, dass der Niederdruckspeicher bis zu einem niedrigeren Mindestdruckniveau entleerbar ist als der Hochdruckspeicher. Die Erfindung betrifft ferner eine Speichervorrichtung, bei der zwischen dem Hochdruckspeicher und dem Niederdruckspeicher ein drittes Ventil angeordnet ist. Die Erfindung betrifft weiterhin ein Verfahren zur Versorgung eines Verbrauchers mit unterschiedlichen Gasdruckniveaus mittels einer erfindungsgemäßen Speichervorrichtung.

Fig. 2a

**Beschreibung**

Die vorliegende Erfindung betrifft eine Speichervorrichtung zur Speicherung eines Gases und zur Versorgung eines Verbrauchers mit unterschiedlichen Gasdruckniveaus gemäß dem Oberbegriff des Anspruchs 1 sowie ein entsprechendes Verfahren.

Aus dem Stand der Technik sind gasbetriebene Verbraucher bekannt, die mehrere Druckanschlüsse aufweisen und gleichzeitig bei unterschiedlichen Druckniveaus betrieben werden. Ein Beispiel hierfür sind spezielle wasserstoffbetriebene Motoren für bestimmte Arbeitsgeräte wie z.B. stationäre oder mobile Baumaschinen. Derartige Verbraucher werden über Speichersysteme versorgt, die das Gas in einem oder mehreren Druckbehältern speichern und an den verschiedenen Druckanschlüssen für den Verbraucher die jeweils benötigten Einspritzdrücke (im Folgenden auch als Gasdruckniveau oder einfach Druckniveau bezeichnet) zur Verfügung stellen.

Das Gas wird dem Verbraucher typischerweise über eine Druckdifferenz bereitgestellt, d.h. das Gas wird im Speichersystem unter einem höheren Druck als dem Einspritzdruck für den Verbraucher gespeichert. Druckminderer sorgen dafür, dass das Gas dem Verbraucher an den jeweiligen Anschlüssen mit dem richtigen Druck zugeführt wird. Die Gasversorgung erfolgt so lange, bis der Druck des im Speichersystem gespeicherten Gases dem Einspritzdruck an einem der Anschlüsse entspricht bzw. diesen unterschreitet. Aus diesem Grund wird das Speichersystem nie vollständig entleert. Das gesamte Gas, dass bei Erreichen des minimalen Drucks, bei dem der Verbraucher noch betrieben werden kann, in dem oder den Druckspeichern und den Druckleitungen des Speichersystems verbleibt, ist daher unbrauchbar und wird im Folgenden als "Totmasse" bezeichnet.

Bei Verbrauchern, die mit zwei unterschiedlichen Druckniveaus betrieben werden, besteht die einfachste Lösung darin, beide Druckanschlüsse für den Verbraucher (im Folgenden als Niederdruckanschluss und Hochdruckanschluss bezeichnet, da einer der beiden Anschlüsse ein höheres Druckniveau bereitstellt als der andere) durch sämtliche vorhandenen Gasspeicher über einen gemeinsamen Versorgungskreis zu versorgen. Dadurch ergibt sich aber eine vergleichsweise große Totmasse, da eine Versorgung nur bis zum Erreichen des höheren der beiden dem Verbraucher bereitgestellten Druckniveaus erfolgen kann. Dies resultiert in einem weniger effizienten Betrieb des Verbrauchers.

Der vorliegenden Erfindung liegt somit die Aufgabe zugrunde, ein Gasspeichersystem mit einer reduzierten Totmasse bereitzustellen, welches einen effizienteren Betrieb eines angeschlossenen Verbrauchers ermöglicht. Dies soll insbesondere ermöglicht werden, ohne eine erheblich vergrößerte Dimensionierung des Speichersystems in Kauf nehmen zu müssen.

Erfindungsgemäß wird diese Aufgabe durch eine Speichervorrichtung mit den Merkmalen des Anspruchs 1, durch eine Speichervorrichtung mit den Merkmalen des Anspruchs 5 sowie durch ein Verfahren mit den Merkmalen des Anspruchs 12 gelöst. Vorteilhafte Ausführungsformen der Erfindung ergeben sich aus den Unteransprüchen und der nachfolgenden Beschreibung.

Demnach wird gemäß einem ersten Aspekt der vorliegenden Erfindung eine Speichervorrichtung zur Speicherung eines Gases und zur Versorgung eines Verbrauchers mit unterschiedlichen Gasdruckniveaus bzw. Einspritzdrücken vorgeschlagen, welche mindestens einen Niederdruckspeicher und mindestens einen Hochdruckspeicher umfasst. Bei dem Verbraucher kann es sich um einen Gasmotor handeln. Bei dem Gas kann es sich um Wasserstoff oder ein beliebiges anderes Gas handeln.

Wenn im Folgenden nur noch von "dem" Niederdruckspeicher oder "dem" Hochdruckspeicher" die Rede ist, soll immer der mindestens eine Niederdruckspeicher bzw. der mindestens eine Hochdruckspeicher gemeint sein, d.h. ein oder mehrere Nieder- bzw. Hochdruckspeicher.

Erfindungsgemäß weist die Speichervorrichtung folgenden Aufbau auf:
Der Niederdruckspeicher ist über ein schaltbares erstes Ventil mit einem Niederdruckanschluss und der Hochdruckspeicher über ein schaltbares zweites Ventil mit einem Hochdruckanschluss der Speichervorrichtung verbunden. Vorliegend meint die Bezeichnung "schaltbares Ventil", dass das Ventil aktiv geschaltet werden kann und die Anschlüsse des Ventils gasleitend miteinander verbunden oder gasdicht voneinander getrennt werden können.

Über den Hochdruckanschluss ist einem angeschlossenen Verbraucher ein höheres Gasdruckniveau bzw. ein höherer Einspritzdruck bereitstellbar als über den Niederdruckanschluss. Hierbei stellt der Niederdruckanschluss ein erstes Gasdruckniveau und der Hochdruckanschluss ein oberhalb des ersten Gasdruckniveaus liegendes zweites Gasdruckniveau bereit. Der Niederdruckanschluss ist mit dem Hochdruckanschluss über ein schaltbares drittes Ventil verbunden. Mit anderen Worten können die Niederdruck- und Hochdruckanschlüsse (im Folgenden zusammen auch nur als die Anschlüsse bezeichnet) je nach Schaltstellung des dritten Ventils gasleitend miteinander verbunden oder gasdicht voneinander getrennt werden.

Der Niederdruckspeicher ist mit dem Hochdruckspeicher über ein viertes Ventil verbunden. Das vierte Ventil kann aktiv oder passiv (z.B. in Form eines Rückschlagventils) schaltbar sein.

Die schaltbaren Ventile sind erfindungsgemäß so angeordnet und können derart geschaltet werden, dass der Niederdruckspeicher bis zu einem niedrigeren Mindestdruckniveau entleert werden kann als der Hochdruckspeicher. Dieses niedrigere Mindestdruckniveau entspricht insbesondere dem durch den Niederdruckanschluss bereitstellbaren ersten Gasdruckniveau.

Der vorliegenden Erfindung liegt dabei die Erkenntnis zugrunde, dass die Totmasse der Speichervorrichtung verringert werden kann, wenn die Zahl derjenigen Gasspeicher, die nur bis zum höheren am Verbraucher anliegenden Gasdruckniveau (d.h. das über den Hochdruckanschluss bereitgestellte Gasdruckniveau) entleert werden können, reduziert wird. Dies entspricht einer Verringerung des beim höheren Gasdruckniveau unbrauchbaren Gasvolumens.

Es werden also nicht mehr alle Gasspeicher (oder ein einzelner, gemeinsamer Gasspeicher) permanent für die Versorgung sowohl des Niederdruck- als auch des Hochdruckanschlusses verwendet, sondern möglichst viele Gasspeicher (bei einer Verwendung von insgesamt N Gasspeichern vorzugsweise N-1 Gasspeicher) bis zum niedrigeren am Verbraucher anliegenden Gasdruckniveau (d.h. bis zum am Niederdruckanschluss bereitgestellten Gasdruckniveau) entleert. Beim niedrigeren Gasdruckniveau weist die verbleibend Totmasse ein geringeres Volumen auf. Dadurch kann ein effizienterer Betrieb des Verbrauchers erreicht werden, ohne ein wesentlich größeres bzw. komplexeres Versorgungssystem bereitstellen zu müssen.

Vorliegend sollen die Begriffe Niederdruckspeicher und Hochdruckspeicher nicht so verstanden werden, dass diese das Gas bei unterschiedlichen Drücken speichern (obwohl dies bei der erfindungsgemäßen Vorrichtung durchaus möglich wäre), sondern vielmehr der sprachlichen Unterscheidung dieser Druckspeicher dienen. Insbesondere kann der mindestens eine Niederdruckspeicher auf ein niedrigeres Mindestdruckniveau entleert werden als der mindestens eine Hochdruckspeicher.

Die ersten, zweiten und/oder dritten Ventile können als Schwarz-Weiß-Ventile mit zwei Schaltstellungen (offen, geschlossen), als Ventile mit mehr als zwei diskreten Schaltstellungen oder als Proportionalventile ausgebildet sein.

In einer möglichen Ausführungsform ist vorgesehen, dass die Speichervorrichtung ferner ein mit dem Niederdruckanschluss verbundenes erstes Druckminderventil und ein mit dem Hochdruckanschluss verbundenes zweites Druckminderventil umfasst. Die Druckminderventile (im Folgenden auch nur als Druckminderer bezeichnet) stellen definierte Einspritzdrücke bzw. Gasdruckniveaus an den Niederdruck- und Hochdruckanschlüssen für einen angeschlossenen Verbraucher bereit. Hierbei stellt das erste Druckminderventil am Niederdruckanschluss ein definiertes erstes Gasdruckniveau bereit, welches geringer ist als ein über das zweite Druckminderventil am Hochdruckanschluss bereitgestelltes zweites Gasdruckniveau. Der angeschlossene Verbraucher wird somit über zwei unterschiedliche Gasdruckniveaus versorgt bzw. angetrieben.

In einer weiteren möglichen Ausführungsform ist vorgesehen, dass das vierte Ventil ein Rückschlagventil ist, welches einen zwischen dem Niederdruckspeicher und dem ersten Ventil gebildeten Niederdruckbereich von einem zwischen dem Hochdruckspeicher und dem zweiten Ventil gebildeten Hochdruckbereich trennt. Die Begriffe Niederdruckbereich und Hochdruckbereich sollen ebenso wie die Begriffe Niederdruckspeicher und Hochdruckspeicher nicht dahingehend verstanden werden, dass im Niederdruckbereich grundsätzlich ein niedrigerer Druck herrscht als im Hochdruckbereich, sondern deuten an, dass der Niederdruckspeicher bzw. -bereich auf ein niedrigeres Mindestdruckniveau entleert werden kann als der Hochdruckspeicher bzw. -bereich. Das Rückschlagventil ist eingerichtet, einen Gasfluss vom Hochdruckbereich in den Niederdruckbereich zu blockieren. Insbesondere öffnet das Rückschlagventil, wenn der Druck im Niederdruckbereich höher ist als im Hochdruckbereich und sperrt im umgekehrten Fall.

In einer weiteren möglichen Ausführungsform ist vorgesehen, dass die Nieder- und Hochdruckspeicher mit einem gemeinsamen Gaseinlass verbunden und über diesen gemeinsam mit Gas befüllbar sind. Vorzugsweise ist der Gaseinlass mit einem zwischen dem Niederdruckspeicher und dem ersten Ventil gebildeten Niederdruckbereich verbunden. Das vierte Ventil ist vorzugsweise eingerichtet, beim Befüllen mit Gas zu öffnen und die Nieder- und Hochdruckspeicher (bzw. die Nieder- und Hochdruckbereiche) gasleitend miteinander zu verbinden.

Insbesondere ist das vierte Ventil als Rückschlagventil mit der zuvor angegebenen Sperrichtung ausgebildet, sodass es automatisch öffnet, wenn über den Gaseinlass Gas mit einem gewissen Druck in den Niederdruckbereich eingeleitet wird. Dadurch kann die Speichervorrichtung schnell und unkompliziert befüllt werden. Alternativ könnte das vierte Ventil auch aktiv schaltbar sein und durch eine Steuereinheit automatisch geschaltet werden. Alternativ könnte das vierte Ventil als ein manuell betätigbares Absperrventil ausgebildet sein, sodass das Schalten des vierten Ventils nicht automatisch, sondern manuell erfolgt.

Gemäß einem zweiten Aspekt der vorliegenden Erfindung wird eine Speichervorrichtung zur Speicherung eines Gases und zur Versorgung eines Verbrauchers mit unterschiedlichen Gasdruckniveaus (bzw. Einspritzdrücken oder schlicht Druckniveaus) vorgeschlagen, welche mindestens einen Niederdruckspeicher und mindestens einen Hochdruckspeicher umfasst, wobei erfindungsgemäß vorgesehen ist, dass der Niederdruckspeicher über ein schaltbares erstes Ventil mit einem Niederdruckanschluss und der Hochdruckspeicher über ein schaltbares zweites Ventil mit einem Hochdruckanschluss verbunden ist, wobei wie schon beim ersten Aspekt über den Hochdruckanschluss einem angeschlossenen Verbraucher ein höheres zweites Gasdruckniveau bereitstellbar ist als über den Niederdruckanschluss, welcher ein erstes Gasdruckniveau bereitstellt. Der Niederdruckspeicher und der Hochdruckspeicher sind über ein drittes Ventil miteinander verbunden. Bei dem dritten Ventil kann es sich um ein aktiv schaltbares Ventil oder um ein Rückschlagventil handeln.

Die Ventile sind derart schaltbar, dass der Niederdruckspeicher bis zu einem niedrigeren Mindestdruckniveau (welches insbesondere dem ersten Gasdruckniveau entspricht) entleerbar ist als der Hochdruckspeicher. Dadurch ergeben sich dieselben Vorteile und Eigenschaften wie für die Speichervorrichtung gemäß dem ersten Aspekt, wobei hier eine alternative Ventilanordnung zum Einsatz kommt. Die Aussage, dass die Ventile schaltbar sind, ist im Hinblick auf das dritte Ventil so zu verstehen, dass damit ein aktives Schalten oder (falls es sich um ein Rückschlagventil handelt) um ein passives Schalten (durch eine entsprechende Druckdifferenz) handeln kann.

In einer möglichen Ausführungsform der Speichervorrichtung gemäß dem zweiten Aspekt ist vorgesehen, dass der Niederdruckanschluss und der Hochdruckanschluss nur über das dritte Ventil miteinander verbunden sind. Mit anderen Worten gibt es keine weitere Verbindung zwischen den beiden Anschlüssen, insbesondere keine weitere Verbindung mit einem Bypass-Ventil. Wird das dritte Ventil daher in die Sperrstellung geschaltet (aktiv oder passiv), sind die Hoch- und Niederdruckanschlüsse gasdicht voneinander getrennt. In diesem Fall wird der Niederdruckanschluss nur von dem Niederdruckspeicher und der Hochdruckanschluss nur von dem Hochdruckspeicher versorgt, sodass hier quasi zwei getrennte Versorgungskreise vorliegen. Bei einem geöffneten dritten Ventil werden die Nieder- und Hochdruckbereiche gasleitend mit einander verbunden, beispielsweise zum Befüllen der Gasspeicher mit Gas über einen gemeinsamen Gaseinlass wie im Rahmen des ersten Aspekts beschrieben. Bei dem dritten Ventil kann es sich um ein aktiv schaltbares Ventil oder um ein Rückschlagventil handeln.

Die im Folgenden beschriebenen möglichen Ausführungsformen können sowohl die Speichervorrichtung gemäß dem ersten Aspekt als auch die Speichervorrichtung gemäß dem zweiten Aspekt betreffen.

In einer weiteren möglichen Ausführungsform ist vorgesehen, dass im Niederdruckbereich ein erster Drucksensor angeordnet ist, welcher das Druckniveau (im Folgenden auch nur als Druck bezeichnet) im Niederdruckbereich erfasst, und im Hochdruckbereich ein zweiter Drucksensor angeordnet ist, welcher das Druckniveau im Hochdruckbereich erfasst. Die erfassten Drücke können für die Schaltung bzw. Ansteuerung der schaltbaren Ventile verwendet werden, um die Hoch- und Niederdruckanschlüsse je nach erfasstem Druckniveau in den Hoch- und Niederdruckbereichen so mit den Hoch- und Niederdruckspeichern zu verbinden (oder von diesen zu trennen), dass sich eine optimale Entleerung der verschiedenen Gasspeicher bei optimaler Reduktion der Totmasse ergibt.

In einer weiteren möglichen Ausführungsform ist vorgesehen, dass die Speichervorrichtung ferner eine Steuereinheit umfasst, welche mit den schaltbaren ersten, zweiten und dritten Ventilen verbunden und eingerichtet ist, diese unabhängig voneinander zu schalten. Die ersten, zweiten und dritten Ventile können elektrisch betätigbar und insbesondere als Magnetventile ausgebildet sein. Dadurch kann eine vollautomatische Steuerung der erfindungsgemäßen Speichervorrichtung realisiert werden, um eine optimale Ausnutzung der Speicherkapazitäten und einen effizienten Betrieb des Verbrauchers zu gewährleisten. Das Vorstehende gilt im Hinblick auf den zweiten Aspekt nur für den Fall, dass das die Nieder- und Hochdruckspeicher verbindende dritte Ventil als aktiv schaltbares Ventil ausgebildet ist. Ist das dritte Ventil als Rückschlagventil ausgebildet, gelten die vorstehenden Aussagen in Bezug auf das Schalten der Ventile nur für die ersten und zweiten Ventile.

In einer weiteren möglichen Ausführungsform ist vorgesehen, dass die Steuereinheit mit den ersten und zweiten Drucksensoren verbunden und eingerichtet ist, die ersten, zweiten und dritten Ventile in Abhängigkeit der über die Drucksensoren erfassten Drücke automatisch derart zu schalten, dass unter gleichzeitiger Druckversorgung der Nieder- und Hochdruckanschlüsse der Niederdruckspeicher bis zu einem ersten Mindestdruckniveau und der Hochdruckspeicher bis zu einem zweiten Mindestdruckniveau entleert wird, wobei das zweite Mindestdruckniveau über dem ersten Mindestdruckniveau liegt. Insbesondere entspricht das erste Mindestdruckniveau dem am Niederdruckanschluss bereitgestellten ersten Gasdruckniveau und das zweite Mindestdruckniveau dem am Hochdruckanschluss bereitgestellten zweiten Gasdruckniveau. Das Vorstehende gilt im Hinblick auf den zweiten Aspekt nur für den Fall, dass das die Nieder- und Hochdruckspeicher verbindende dritte Ventil als aktiv schaltbares Ventil ausgebildet ist. Ist das dritte Ventil als Rückschlagventil ausgebildet, gelten die vorstehenden Aussagen in Bezug auf das Schalten der Ventile nur für die ersten und zweiten Ventile.

In einer weiteren möglichen Ausführungsform ist vorgesehen, dass die ersten und zweiten Ventile und/oder die ersten und zweiten Druckminderventile derart ausgelegt sind, dass ein Gasfluss durch das erste Ventil größer ist als ein Gasfluss durch das zweite Ventil. Bei einer Ausgestaltung der Speichervorrichtung gemäß dem ersten Aspekt, bei dem zwischen den Nieder- und Hochdruckbereichen ein Rückschlagventil angeordnet ist, sorgt der geringere Gasfluss durch das zweite Ventil dafür, dass im Hochdruckbereich ein höherer Druck als im Niederdruckbereich herrscht und das Rückschlagventil geschlossen bleibt.

Die vorliegende Erfindung betrifft weiterhin ein Arbeitsgerät mit einer erfindungsgemäßen Speichervorrichtung und einem von dieser mit zwei unterschiedlichen Einspritzdrücken bzw. Gasdruckniveaus versorgten Verbraucher, welcher einen an den Niederdruckanschluss der Speichervorrichtung angeschlossenen Niederdruckeinlass und einen an den Hochdruckanschluss der Speichervorrichtung angeschlossenen Hochdruckeinlass besitzt. Dabei ergeben sich offensichtlich dieselben Vorteile, Eigenschaften und möglichen Ausführungsformen wie für die erfindungsgemäße Speichervorrichtung, weshalb an dieser Stelle auf eine wiederholende Beschreibung verzichtet wird.

Bei dem Verbraucher kann es sich um einen Gasmotor, insbesondere einen mit Wasserstoff betriebenen Motor handeln. Bei dem Arbeitsgerät kann es sich um eine Baumaschine wie beispielsweise einen Bagger, einen Kran (stationär oder mobil), einen Muldenkipper, ein Tiefbaugerät wie eine Schlitzwandfräse, Drehbohranlage oder Vibrationsramme, eine Betonpumpe oder um eine beliebige andere Baumaschine mit einem gasbetriebenen Motor handeln.

Die vorliegende Erfindung betrifft weiterhin ein Verfahren zur Versorgung eines Verbrauchers, insbesondere eines gasbetriebenen Motors, mit unterschiedlichen Gasdruckniveaus mittels einer erfindungsgemäßen Speichervorrichtung. Hierbei werden im Niederdruckbereich ein erster Druck und im Hochdruckbereich ein zweiter Druck gemessen und in Abhängigkeit der gemessenen Drücke die schaltbaren Ventile derart geschalten, dass der Niederdruckspeicher bis zu einem ersten Mindestdruckniveau und der Hochdruckspeicher bis zu einem zweiten Mindestdruckniveau entleert werden können, wobei das zweite Mindestdruckniveau über dem ersten Mindestdruckniveau liegt. Dabei ergeben sich offensichtlich dieselben Vorteile, Eigenschaften und möglichen Ausführungsformen wie für die erfindungsgemäße Speichervorrichtung, weshalb an dieser Stelle auf eine wiederholende Beschreibung verzichtet wird. Insbesondere entspricht das erste Mindestdruckniveau dem am Niederdruckanschluss bereitgestellten ersten Gasdruckniveau und das zweite Mindestdruckniveau dem am Hochdruckanschluss bereitgestellten zweiten Gasdruckniveau.

In einer möglichen Ausführungsform des erfindungsgemäßen Verfahrens ist vorgesehen, dass die Speichervorrichtung gemäß dem ersten Aspekt ausgebildet ist, wobei die ersten und zweiten Ventile geöffnet und die dritten und vierten Ventile geschlossen sind, wenn der erste gemessene Druck größer ist als das erste Mindestdruckniveau (erste Phase). Dadurch kann der Niederdruckspeicher bis zum ersten Mindestdruckniveau entleert werden. Ist der erste gemessene Druck kleiner oder gleich dem ersten Mindestdruckniveau (zweite Phase), sind die zweiten und dritten Ventile dagegen geöffnet und die ersten und vierten Ventile geschlossen, sodass der Hochdruckspeicher bis zum zweiten Mindestdruckniveau entleert werden kann. Vorzugsweise erfolgt die Versorgung der Niederdruck- und Hochdruckanschlüsse dabei gleichzeitig.

Bei dieser Lösung wird eine Reduktion der Totmasse dadurch erreicht, dass es dem Niederdruckspeicher mithilfe des als Bypass-Ventil fungierenden dritten Ventils ermöglicht wird, bis zum niedrigeren ersten Mindestdruckniveau entleert zu werden. Es können mehrere Niederdruckspeicher vorgesehen sein, die alle im Niederdruckbereich angeordnet sind und daher alle bis zum ersten Mindestdruckniveau entleert werden. Es kann ein einziger Hochdruckspeicher vorgesehen sein. Sind insgesamt N Gasspeicher vorgesehen, können die N-1 Niederdruckspeicher bis zum ersten Mindestdruckniveau entleert werden, während nur der eine Hochdruckspeicher bis zum höheren zweiten Mindestdruckniveau entleert wird. Alternativ kann mehr als ein Hochdruckspeicher vorgesehen sein.

In der ersten Phase versorgt der Niederdruckspeicher den Niederdruckanschluss, da der Druck im Niederdruckbereich oberhalb des ersten Gasdruckniveaus liegt. Der Hochdruckspeicher versorgt den Hochdruckanschluss. Da die dritten und vierten Ventile geschlossen sind, sind die Nieder- und Hochdruckbereiche voneinander getrennt, sodass die Nieder- und Hochdruckanschlüsse über zwei getrennte Kreise versorgt werden. Vorzugsweise ist der Massenfluss über das zweite Ventil geringer als über das erste Ventil. In diesem Fall kann das vierte Ventil als Rückschlagventil ausgebildet sein, welches durch den höheren Druck im Hochdruckbereich geschlossen bleibt.

Erreicht der gemessene erste Druck (Niederdruckbereich) das erste Mindestdruckniveau, ist der Niederdruckspeicher als entleert zu betrachten. Das als Bypass-Ventil fungierende dritte Ventil wird nun geöffnet, sodass in der zweiten Phase der Hochdruckspeicher sowohl den Hochdruckanschluss als auch den Niederdruckanschluss versorgt. Hierfür sind der Hochdruckspeicher, die ersten und zweiten Ventile und/oder die ersten und zweiten Druckminderventile insbesondere so ausgelegt, dass nach Entleerung des Niederdruckspeichers der Druck im Hochdruckbereich noch oberhalb des zweiten Gasdruckniveaus liegt. Die Versorgung über den Hochdruckspeicher erfolgt so lange, bis der Druck im Hochdruckbereich das zweite Mindestdruckniveau bzw. das am Hochdruckanschluss bereitstellbare zweite Gasdruckniveau erreicht und der Hochdruckspeicher somit ebenfalls entleert ist.

In einer alternativ möglichen Ausführungsform des erfindungsgemäßen Verfahrens ist vorgesehen, dass die Speichervorrichtung gemäß dem ersten Aspekt ausgebildet ist. In dieser Ausführungsform sind die ersten, zweiten und dritten Ventile in der ersten Phase geöffnet und das vierte Ventil kann geschlossen sein, wobei sich die erste Phase dadurch auszeichnet, dass der erste gemessene Druck größer als ein definiertes Zwischendruckniveau ist, welches insbesondere oberhalb des zweiten Mindestdruckniveaus liegt. Dabei versorgen die Nieder- und Hochdruckspeicher gemeinsam die Nieder- und Hochdruckanschlüsse und werden bis zum Zwischendruckniveau entleert. Ist der erste gemessene Druck kleiner oder gleich dem Zwischendruckniveau (zweite Phase), sind die ersten und zweiten Ventile geöffnet und die dritten und vierten Ventile geschlossen, sodass die Hoch- und Niederdruckbereiche voneinander getrennt sind und die Hoch- und Niederdruckspeicher jeweils nur den Hoch- bzw. Niederdruckanschluss versorgen. Dadurch kann der Niederdruckspeicher bis zum ersten Mindestdruckniveau und der Hochdruckspeicher getrennt davon bis zum zweiten Mindestdruckniveau entleert werden.

Dadurch wird durch eine unterschiedliche Schaltung der Ventile dasselbe Ergebnis erreicht wie bei der zuvor beschriebenen Ausführungsform. Hierzu ist das Zwischendruckniveau geeignet zu wählen, wobei der Wert des Zwischendruckniveaus von der Auslegung der Komponenten (Gasspeicher, Ventile, Druckminderer) der Speichervorrichtung abhängt. Vorzugsweise ist das Zwischendruckniveau so gewählt, dass die Hoch- und Niederdruckspeicher gleichzeitig ihre jeweiligen Mindestdruckniveaus erreichen.

In einer alternativ möglichen Ausführungsform des erfindungsgemäßen Verfahrens ist vorgesehen, dass die Speichervorrichtung gemäß dem ersten Aspekt ausgebildet ist, wobei die ersten und dritten Ventile geöffnet und die zweiten und vierten Ventile geschlossen sind, wenn der erste gemessene Druck größer ist als das zweite Mindestdruckniveau (erste Phase). In diesem Fall versorgt der Niederdruckspeicher in der ersten Phase sowohl den Niederdruckanschluss als auch den Hochdruckanschluss und kann bis zum zweiten Mindestdruckniveau entleert werden. In der ersten Phase versorgt der Hochdruckspeicher insbesondere keinen der Anschlüsse. Ist der erste gemessene Druck kleiner oder gleich dem zweiten Mindestdruckniveau (zweite Phase), sind die ersten und zweiten Ventile dagegen geöffnet und die dritten und vierten Ventile geschlossen, sodass die Hoch- und Niederdruckbereiche voneinander getrennt sind und die Hoch- und Niederdruckspeicher jeweils nur den Hoch- bzw. Niederdruckanschluss versorgen. Dadurch kann der Niederdruckspeicher bis zum ersten Mindestdruckniveau und der Hochdruckspeicher bis zum zweiten Mindestdruckniveau entleert werden.

Auch hier wird durch eine unterschiedliche Schaltung der Ventile dasselbe Ergebnis erreicht wie bei den beiden zuvor beschriebenen Ausführungsformen. Vorzugsweise sind hierbei mehrere Niederdruckspeicher und/oder mehrere Hochdruckspeicher vorgesehen, welche unterschiedliche Kapazitäten aufweisen und derart ausgelegt sind, dass in der zweiten Phase die Hoch- und Niederdruckspeicher gleichzeitig ihre jeweiligen Mindestdruckniveaus erreichen. Auch die Ventile und/oder Druckminderventile sind entsprechend auszulegen, insbesondere im Hinblick auf die Massenströme durch die ersten und zweiten Ventile. Alternativ kann jeweils nur ein Niederdruckspeicher und nur ein Hochdruckspeicher vorgesehen sein, welche jedoch insbesondere unterschiedliche Kapazitäten aufweisen.

In einer alternativ möglichen Ausführungsform des erfindungsgemäßen Verfahrens ist vorgesehen, dass die Speichervorrichtung gemäß dem zweiten Aspekt der vorliegenden Erfindung ausgebildet ist, wobei die ersten und zweiten Ventile geöffnet sind und das dritte Ventil geschlossen ist, sodass der Niederdruckspeicher bis zum ersten Mindestdruckniveau und getrennt davon der Hochdruckspeicher bis zum zweiten Mindestdruckniveau entleert werden kann. Dadurch, dass das dritte Ventil geschlossen ist, sind die Hoch- und Niederdruckbereiche voneinander getrennt und die Hoch-und Niederdruckspeicher versorgen jeweils nur den Hoch- bzw. Niederdruckanschluss.

Vorzugsweise sind hierbei mehrere Niederdruckspeicher und/oder mehrere Hochdruckspeicher vorgesehen, welche unterschiedliche Kapazitäten aufweisen und derart ausgelegt sind, dass die Hoch- und Niederdruckspeicher gleichzeitig ihre jeweiligen Mindestdruckniveaus erreichen. Auch die ersten und zweiten Ventile und/oder die ersten und zweiten Druckminderventile sind entsprechend auszulegen, insbesondere im Hinblick auf die Massenströme durch die ersten und zweiten Ventile. Alternativ kann jeweils nur ein Niederdruckspeicher und nur ein Hochdruckspeicher vorgesehen sein, welche jedoch insbesondere unterschiedliche Kapazitäten aufweisen.

Das erfindungsgemäße Verfahren gemäß einer der zuvor beschriebenen Ausführungsformen kann beide Phasen oder nur eine der beiden Phasen umfassen. Beispielsweise könnte das Verfahren bei einer teilweise entleerten Speichervorrichtung gestartet werden, sodass die schaltbaren Ventile direkt in die Schaltstellung der zweiten Phase geschalten werden (oder bereits so geschaltet sind). Das erfindungsgemäße Verfahren muss nicht bis zum vollständigen Entleeren des Hochdruckspeichers oder des Niederdruckspeichers durchgeführt werden, sondern kann nach erfolgtem Betreiben des Verbrauchers beendet werden, wobei die Speichervorrichtung noch nicht entleert ist. Das erfindungsgemäße Verfahren kann natürlich auch eine Versorgung des Verbrauchers über die ersten und zweiten Phasen bis zum vollständigen Entleeren der Speichervorrichtung umfassen (ggf. auch ein vorheriges und/oder anschließendes Befüllen der Speichervorrichtung), wobei der Betrieb des Verbrauchers nicht kontinuierlich zu erfolgen braucht, sondern mehrere Phasen der Inaktivität umfassen kann.

Weitere Merkmale, Einzelheiten und Vorteile der Erfindung ergeben sich aus den nachfolgend anhand der Figuren erläuterten Ausführungsbeispielen. Es zeigen:

Fig. 1a-d:	ein Beispiel für eine aus dem Stand der Technik bekannte Speichervorrichtung, wobei unterschiedliche Phasen der Gasversorgung und ein Flussdiagramm (Fig. 1d) gezeigt sind;

Fig. 2a-d:	ein erstes Ausführungsbeispiel der erfindungsgemäßen Speichervorrichtung, wobei unterschiedliche Phasen der Gasversorgung gezeigt sind;

Fig. 2e:	ein Flussdiagramm eines mittels der Speichervorrichtung nach Fig. 2a-d durchgeführten Verfahrens;

Fig. 3a-b:	ein zweites Ausführungsbeispiel der erfindungsgemäßen Speichervorrichtung, wobei unterschiedliche Phasen der Gasversorgung gezeigt sind;

Fig. 3c:	ein Flussdiagramm eines mittels der Speichervorrichtung nach Fig. 3a-b durchgeführten Verfahrens;

Fig. 4a-c:	ein drittes Ausführungsbeispiel der erfindungsgemäßen Speichervorrichtung;

Fig. 4d:	ein Flussdiagramm eines mittels der Speichervorrichtung nach Fig. 4a-c durchgeführten Verfahrens;

Fig. 5a-d: ein viertes Ausführungsbeispiel der erfindungsgemäßen Speichervorrichtung, wobei unterschiedliche Phasen der Gasversorgung gezeigt sind; und

Fig.5e: ein Flussdiagramm eines mittels der Speichervorrichtung nach Fig. 5a-d durchgeführten Verfahrens.

Die Gesamtmasse $M_T$ des Gases in der Speichervorrichtung berechnet sich wie folgt:

$$M_T = M_U + M_D, \qquad\qquad (1)$$

wobei $M_U$ für die vom Verbraucher nutzbare Masse und $M_D$ für die vom Verbraucher nicht nutzbare Masse bzw. Totmasse des Gases steht.

Die nutzbare Masse $M_U$ hängt von der geforderten Autonomie des Verbrauchers ab. Die Totmasse $M_D$ sollte in jedem System möglichst minimiert werden, da sie nicht für den Antrieb des Verbrauchers verwendet werden kann. Im Falle eines gasbetriebenen Motors, der mit zwei unterschiedlichen Druckniveaus $P_{low}$ und $P_{high}$ versorgt wird, ist ein bestimmter Teil des gespeicherten Gases beim niedrigeren Druckniveau $P_{low}$ unbrauchbar, während ein bestimmter anderer Teil des gespeicherten Gases beim höheren Druckniveau $P_{high}$ unbrauchbar ist. Es gibt also für jedes Druckniveau $P_{low}$ und $P_{high}$ eine zugehörige Totmasse:

$$M_D = \rho\left(P_{low}, T_0\right) \cdot V_{Plow} + \rho\left(P_{high}, T_0\right) \cdot V_{Phigh}, \qquad\qquad (2)$$

$$V_{Plow} + V_{Phigh} = V_T. \qquad\qquad (3)$$

Hierbei bezeichnen $\rho\left(P,T\right)$ die Dichte des Gases bei einem Druck P und einer Temperatur T, $V_{Plow}$ das bei einem Druck $P_{low}$ unbrauchbare Gasvolumen (d.h. das Volumen der Totmasse beim Druck $P_{low}$) und $V_{Phigh}$ das bei einem Druck $P_{high}$ unbrauchbare Gasvolumen (d.h. das Volumen der Totmasse beim Druck $P_{high}$), wobei $P_{low} < P_{high}$. $V_T$ bezeichnet das gesamte Gasvolumen der Speichervorrichtung.

Da ein Gas bei einem niedrigeren Druck (bei gleicher Temperatur) eine geringere Dichte aufweist, folgt aus den Gleichungen (2) und (3), dass sich die absoluten minimalen und maximalen Totmassen $M_{D,min}$ und $M_{D,max}$ wie folgt ergeben:

$$\left(V_{Phigh} = 0\right) \;\rightarrow\; M_{D,min} = \rho\left(P_{low}, T_0\right) \cdot V_T, \qquad\qquad (5)$$

$$\left(V_{Plow} = 0\right) \;\rightarrow\; M_{D,max} = \rho\left(P_{high}, T_0\right) \cdot V_T. \qquad\qquad (6)$$

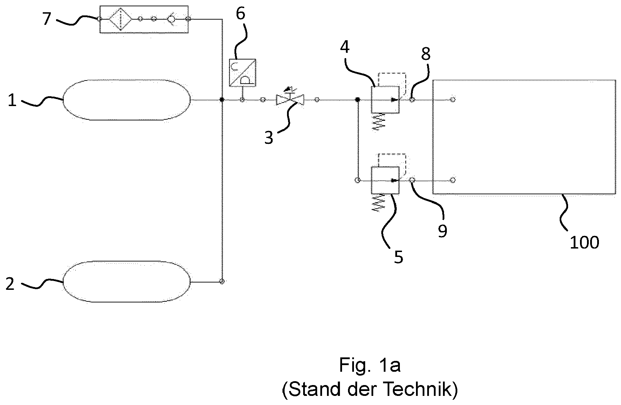

Bei Verbrauchern, die mit zwei unterschiedlichen Druckniveaus bzw. Einspritzdrücken betrieben werden, besteht die einfachste Lösung darin, die Nieder- und Hochdruckanschlüsse über einen einzigen Versorgungskreis aus einem oder mehreren gemeinsamen Gasspeichern zu speisen. Ein Beispiel für ein solches bekanntes System ist in der Figur 1a als schematischer Schaltplan dargestellt. Die Speichervorrichtung umfasst zwei Gasspeicher 1, 2, die über ein schaltbares Ventil 3 (welches hier als Magnetventil dargestellt ist) mit den beiden Anschlüssen 8, 9 für den Verbraucher 100 (z.B. einen Gasmotor) verbunden ist. Einer der Anschlüsse (z.B. Anschluss 8) stellt ein niedrigeres Druckniveau bereit als der andere Anschluss 9, sodass ersterer als Niederdruckanschluss 8 und der andere als Hochdruckanschluss 9 bezeichnet werden können. Beide Anschlüsse 8, 9 werden über einen einzigen Kreis durch beide Gasspeicher 1, 2 versorgt.

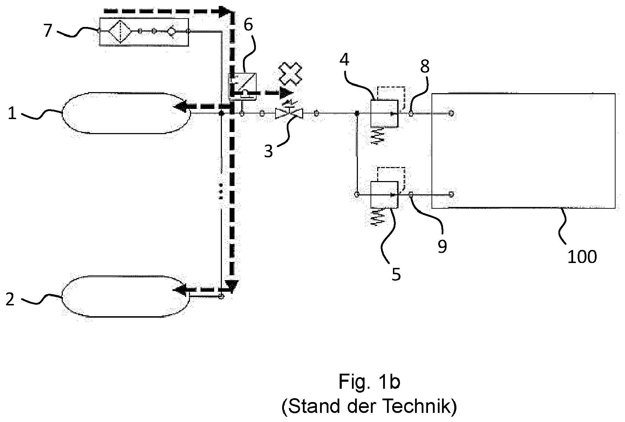

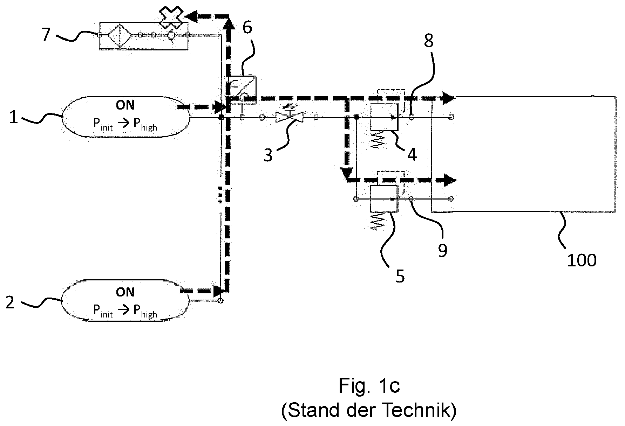

Um an den Anschlüssen 8, 9, an denen der Verbraucher 100 über entsprechende Nieder- und Hochdruckeingänge angeschlossen ist, jeweils ein definiertes Druckniveau bereitzustellen, sind Druckminderer 4, 5 vorgesehen, die den Systemdruck auf das jeweilige Druckniveau absenken. Ein Drucksensor 6 erfasst den Druck im Bereich zwischen dem Ventil 3 und den Gasspeichern 1, 2. Es können mehr als zwei Gasspeicher vorhanden sein. Über einen gemeinsamen Gaseinlass 7 können die Gasspeicher 1, 2 mit Gas befüllt werden, wobei hierzu das Ventil 3 geschlossen wird. Dies ist in der Figur 1b dargestellt, wobei der Gasfluss in dieser und allen nachfolgenden Figuren als gestrichelte Pfeile dargestellt ist. Die geschlossene Schaltstellung des Ventils 3 ist durch ein Kreuz angedeutet (auch bei den übrigen Figuren). Die Figur 1c zeigt den Zustand der Gasversorgung des Verbrauchers 100. Hierzu ist das Ventil 3 geöffnet, während ein Rückschlagventil im Gaseinlass 7 dafür sorgt, dass dieser verschlossen ist und kein Gas austritt.

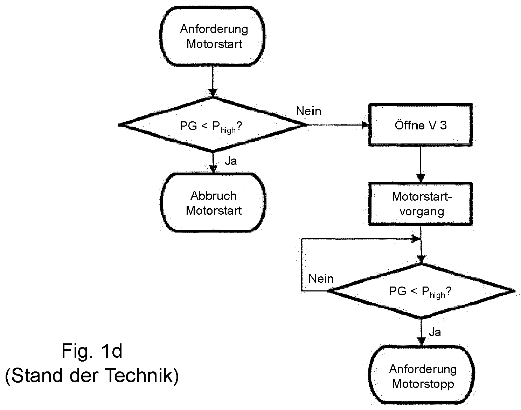

Die Figur 1d zeigt ein Flussdiagramm für die Versorgung eines als Gasmotor ausgebildeten Verbrauchers 100 mit der Speichervorrichtung gemäß Fig. 1a-c. Hierbei bezeichnet "PG" den durch den Drucksensor 6 erfassten Druck und "V 3" das Ventil 3.

Der Gasdruck in der Speichervorrichtung nach dem Befüllen wird vorliegend als $P_{init}$ bezeichnet (Initialdruck). Dadurch, dass beide Anschlüsse 8, 9 über denselben Versorgungskreis versorgt werden, ist die Speichervorrichtung insgesamt als entleert zu betrachten, wenn der durch den Drucksensor 6 gemessene Druck das höhere der beiden an den Anschlüssen bereitgestellte Druckniveau $P_{high}$ erreicht. Dadurch ergibt sich aber eine vergleichsweise große Totmasse gemäß Gleichung (6), da eine Versorgung nur bis zum Erreichen des höheren Druckniveaus $P_{high}$ erfolgen kann.

Die erfindungsgemäße Idee besteht darin, das bei dem am Hochdruckanschluss bereitgestellten Druckniveau $P_{high}$ unbrauchbare Gasvolumen $V_{Phigh}$ in der Speichervorrichtung zu minimieren, sodass sich die Totmasse der Gleichung (5) annähert.

Im Folgenden werden vier Ausführungsbeispiele der erfindungsgemäßen Speichervorrichtung 10 beschrieben. Gleiche Komponenten werden in den verschiedenen Ausführungsbeispielen mit gleichen Bezugszeichen bezeichnet.

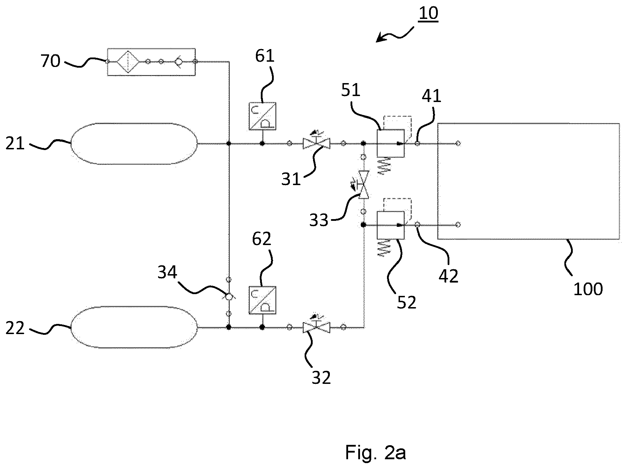

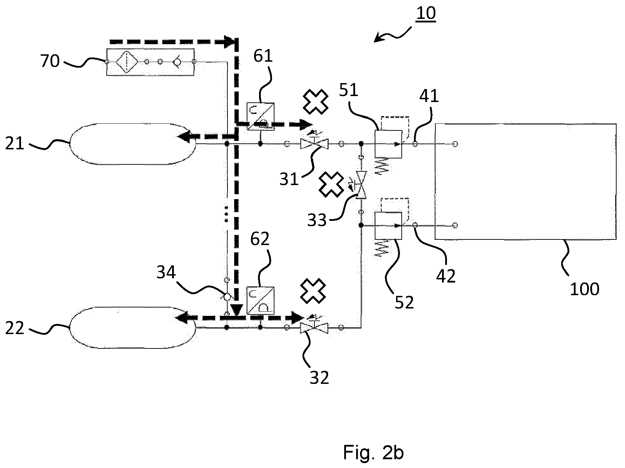

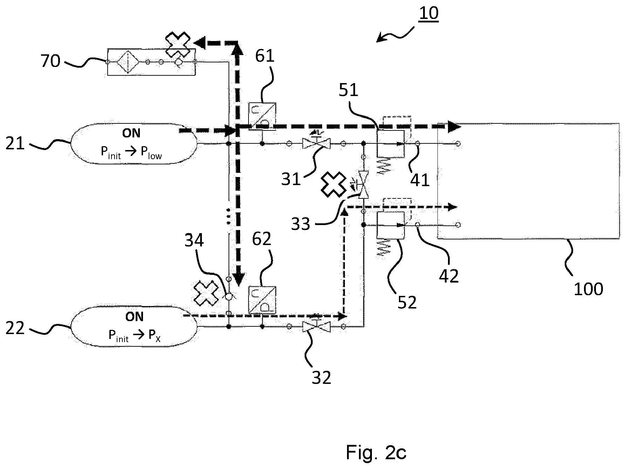

Ein erstes Ausführungsbeispiel ist in den Figuren 2a-d gezeigt, wobei die Figur 2a den Aufbau der Speichervorrichtung 10, die Figur 2b den Vorgang des Befüllens und die Figuren 2c-d die beiden Phasen der Versorgung des Verbrauchers 100 zeigen.

Die erfindungsgemäße Speichervorrichtung 10 umfasst einen Gaseinlass 70 zum Befüllen der Gasspeicher 21, 22, welcher den bzgl. der Figur 1a beschriebenen Aufbau und dieselbe Funktion aufweist. Die Speichervorrichtung 10 umfasst einen Niederdruckanschluss 41, dem ein erster Druckminderer 51 vorgeschaltet ist, um ein definiertes erstes Gasdruckniveau $P_{low}$ bereitzustellen. Die Speichervorrichtung 10 umfasst ferner einen Hochdruckanschluss 42, dem ein zweiter Druckminderer 52 vorgeschaltet ist, um ein definiertes zweites Gasdruckniveau $P_{high}$ bereitzustellen, welches oberhalb des ersten Gasdruckniveaus $P_{low}$ liegt. Der Verbraucher 100 weist entsprechende Nieder- und Hochdruckeingänge auf, die mit den Nieder- und Hochdruckanschlüssen 41, 42 der Speichervorrichtung 10 verbunden sind.

Die Speichervorrichtung 10 umfasst in diesem Ausführungsbeispiel einen Niederdruckspeicher 21 und einen Hochdruckspeicher 22, welche identische oder unterschiedliche Kapazitäten aufweisen können. Der Niederdruckspeicher 21 ist über ein schaltbares erstes Ventil 31 mit dem Niederdruckanschluss 41 verbunden, wobei der erste Druckminderer 51 zwischen das erste Ventil 31 und den Niederdruckanschluss 41 geschaltet ist. Der Hochdruckspeicher 22 ist über ein schaltbares zweites Ventil 32 mit dem Hochdruckanschluss 42 verbunden, wobei der zweite Druckminderer 52 zwischen das zweite Ventil 32 und den Hochdruckanschluss 42 geschaltet ist.

Die Versorgungsleitung, die das erste Ventil 31 mit dem ersten Druckminderer 51 verbindet, ist über eine Bypass-Leitung mit der Versorgungsleitung verbunden, die das zweite Ventil 32 mit dem zweiten Druckminderer 52 verbindet. In dieser Bypass-Leitung ist ein schaltbares drittes Ventil 33 angeordnet, dass in einem geöffneten Zustand die Niederdruckanschluss 41 mit dem Hochdruckanschluss 42 verbindet. Das dritte Ventil 33 fungiert somit als Bypass-Ventil, auf dessen Funktion weiter unten eingegangen wird.

Parallel zur Bypass-Leitung sind der Niederdruckspeicher 21 und der Hochdruckspeicher 22 über ein viertes Ventil 34 miteinander verbunden, welches in diesem Ausführungsbeispiel als Rückschlagventil ausgebildet ist. Der Bereich zwischen dem vierten Ventil 34, dem Niederdruckspeicher 21 und den ersten Ventil 31 bildet einen Niederdruckbereich der Speichervorrichtung 10. Der Bereich zwischen dem vierten Ventil 34, dem Hochdruckspeicher 22 und den zweiten Ventil 32 bildet einen Hochdruckbereich der Speichervorrichtung 10. Der Niederdruckbereich ist vom Hochdruckbereich also durch das vierte Ventil 34 getrennt. Dessen Sperrrichtung ist so eingestellt, dass es öffnet, wenn der Druck im Niederdruckbereich den Druck im Hochdruckbereich übersteigt, und die Nieder- und Hochdruckbereiche gasleitend einander verbindet. In einer alternativen Ausführungsform könnte das vierte Ventil 34 als aktiv schaltbares Ventil ausgebildet sein. Auch eine Ausgestaltung als manuell schaltbares Absperrventil ist prinzipiell denkbar.

Im Niederdruckbereich zwischen Niederdruckspeicher 21 und erstem Ventil 31 befindet sich in erster Drucksensor 61, der das aktuell im Niederdruckbereich herrschende Druckniveau erfasst. Ein zweiter Drucksensor 62 befindet sich im Hochdruckbereich zwischen Hochdruckspeicher 22 und zweitem Ventil 32 und erfasst das aktuell im Hochdruckbereich herrschende Druckniveau.

Je nach Schaltzustand der Ventile 31, 32, 33, 34 können die Nieder- und Hochdruckanschlüsse 41, 42 also über einen gemeinsamen Versorgungskreis oder über zwei getrennte Versorgungskreise mit Gas versorgt werden.

Vorzugsweise sind die Drucksensoren 61, 62 und die schaltbaren Ventile 31, 32, 33 mit einer in den Figuren nicht dargestellten Steuereinheit elektrisch verbunden, welche die Ventile 31, 32, 33 abhängig von den erfassten Drücken elektrisch betätigt.

In der Figur 2b ist der Vorgang des Befüllens der Speichervorrichtung 10 mit Gas über den Gaseinlass 70 dargestellt. Hierfür werden die ersten und zweiten Ventile 31, 32 sowie ggf. das dritte Ventil 33 geschlossen. Durch den über den Gaseinlass 70 eingebrachten Druck öffnet das Rückschlagventil 34, sodass alle Gasspeicher 21, 22 über den gemeinsamen Gaseinlass 70 befüllt werden können. Nach dem Befüllen der Speichervorrichtung 10 herrscht in den Nieder- und Hochdruckbereichen ein Initialdruck $P_{init}$.

Die Figuren 2c-d zeigen zwei Phasen des Versorgungsbetriebs der Speichervorrichtung 10 für den Verbraucher 100, welcher es ermöglicht, dass der Niederdruckspeicher 21 bis zu einem niedrigeren Mindestdruckniveau entleert werden kann als der Hochdruckspeicher 22, welche bis zu einem höheren Mindestdruckniveau entleert wird. Dabei entspricht das niedrigeren Mindestdruckniveau dem über den ersten Druckminderer 51 am Niederdruckanschluss 41 bereitgestellten ersten Gasdruckniveau $P_{low}$ und das höhere Mindestdruckniveau dem über den zweiten Druckminderer 52 am Hochdruckanschluss 42 bereitgestellten zweiten Gasdruckniveau $P_{high}$.

In einer ersten Phase, welche in der Figur 2c dargestellt ist, wird der Niederdruckanschluss 41 nur über den Niederdruckspeicher 21 und der Hochdruckanschluss 42 nur über den Hochdruckspeicher 22 versorgt. Hierzu sind die ersten und zweiten Ventile 31, 32 geöffnet und das dritte Ventil 33 geschlossen. Die ersten und zweiten Druckminderer 51, 52 sind so ausgelegt, dass der Massenstrom durch den zweiten Druckminderer 52 bzw. durch das zweite Ventil 32 kleiner ist als derjenige durch den ersten Druckminderer 51 bzw. das erste Ventil 31. Dadurch entlädt sich der Hochdruckspeicher 22 langsamer als der Niederdruckspeicher 21, wobei das Rückschlagventil 34 geschlossen bleibt aufgrund des höheren Drucks im Hochdruckbereich. Alternativ oder zusätzlich könnte die Differenz im Massenstrom auch durch eine entsprechend unterschiedliche Auslegung der ersten und zweiten Ventile 31, 32 erzeugt werden.

Dieser Schaltzustand gemäß der ersten Phase wird so lange beibehalten, bis der vom ersten Drucksensor 61 erfasste Druck $PG_1$ im Niederdruckbereich das durch den ersten Druckminderer 51 erzeugte erste Druckniveau $P_{low}$ erreicht. In der ersten Phase wird also der Niederdruckspeicher 21 bis zum ersten Mindestdruckniveau $P_{low}$ und der Hochdruckspeicher 22 bis zu einem vorbestimmten Zwischendruck $P_X$ entleert, wobei der Wert von $P_X$ von der Kapazität des Niederdruckspeichers 21 (bzw. der Anzahl der Niederdruckspeicher 21) abhängt. Der Niederdruckspeicher 21 ist nun vollständig entleert.

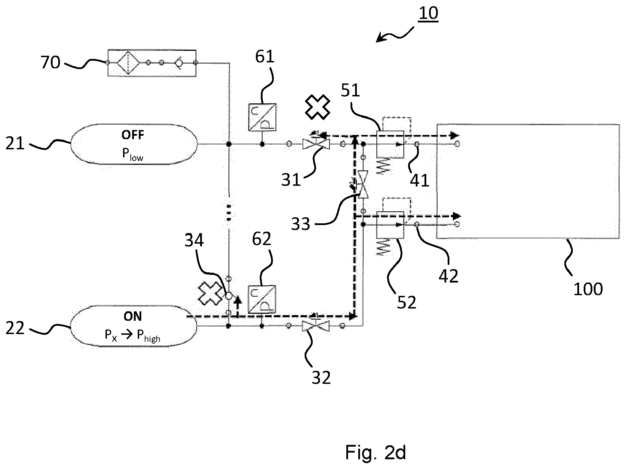

Die Speichervorrichtung 10 geht nun in eine zweite Phase über, die in der Figur 2d dargestellt ist. In der zweiten Phase ist das erste Ventil 31 geschlossen, während das dritte Ventil 33 geöffnet ist und die beiden Anschlüsse 41, 42 gasleitend mit einer verbindet. Das Rückschlagventil 34 bleibt weiterhin geschlossen aufgrund der Druckdifferenz zwischen Nieder- und Hochdruckbereich. Das zweite Ventil 32 bleibt ebenfalls geöffnet. Dadurch werden beide Anschlüsse 41, 42 nun über den Hochdruckspeicher 22 versorgt, welcher bis zum durch den zweiten Druckminderer 52 am Hochdruckanschluss 42 bereitgestellten zweiten Mindestdruckniveau $P_{high}$ entleert wird. Erreicht der erfasste Druck $PG_2$ im Hochdruckbereich den Wert $P_{high}$, ist der Hochdruckspeicher 22 als entleert anzusehen.

Die Werte von $P_X$, $P_{low}$ und $P_{high}$ sind vorzugsweise in der genannten Steuereinheit hinterlegt.

Dadurch, dass es dem Niederdruckspeicher 21 ermöglicht wird, bis zum niedrigeren Mindestdruckniveau $P_{low}$ entleert zu werden und nur der Hochdruckspeicher 22 nur bis zu höheren Mindestdruckniveau $P_{high}$ entleert wird, kann die Totmasse der Speichervorrichtung 10 insgesamt reduziert werden.

Die Speichervorrichtung 10 kann mehrere Gasspeicher 21, 22 umfassen, beispielsweise eine Anzahl von N Gasspeichern 21, 22, wobei N-1 Niederdruckspeicher 21 und ein Hochdruckspeicher 22 vorgesehen sein können. In diesem Fall werden alle N-1 Niederdruckspeicher 21 bis zum niedrigeren Druckniveau $P_{low}$ entleert.

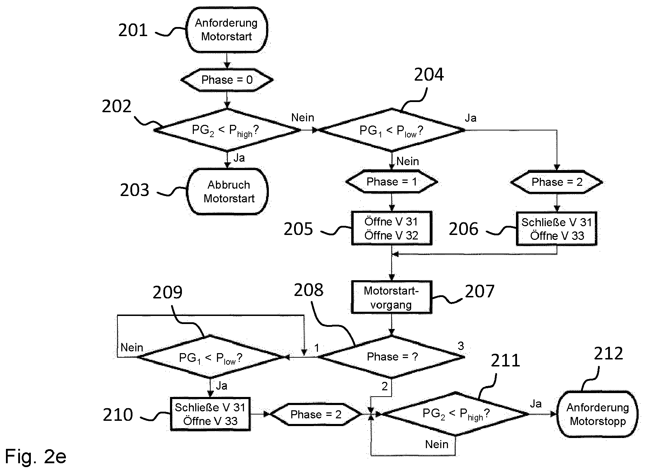

Die Figur 2e zeigt anhand eines Flussdiagramms ein Ausführungsbeispiel für ein mit der Speichervorrichtung der Figuren 2a-d durchführbares Verfahren zum Betrieb des als Gasmotor ausgebildeten Verbrauchers 100. Das Flussdiagramm berücksichtigt dabei nicht die Start- und Stoppfunktionen des Motors 100. Hierbei (sowie bei den Flussdiagrammen der nachfolgenden Ausführungsbeispiele) bezeichnet $PG_1$ das vom ersten Drucksensor 61 erfasste Druckniveau und $PG_2$ das vom zweiten Drucksensor 62 erfasste Druckniveau. Die Ventile 31, 32, 33 werden als "V 31", "V 32", und "V 33" bezeichnet. Diese Konvention gilt auch für die Flussdiagramme der weiteren Ausführungsbeispiele.

Nach einer Anforderung eines Motorstarts (Schritt 201) wird überprüft (insbesondere von der zuvor genannten Steuereinheit), ob das Druckniveau $PG_2$ oberhalb des zweiten Mindestdruckniveaus $P_{high}$ liegt (Schritt 202). Falls nein, ist die Speichervorrichtung 10 bzw. der Hochdruckspeicher 22 als entleert zu betrachten und der Motorstart wird abgebrochen (Schritt 203). Falls ja, wird geprüft, ob das Druckniveau $PG_1$ oberhalb des ersten Mindestdruckniveaus $P_{low}$ liegt (Schritt 204). Falls ja, reicht der Druck im Niederdruckspeicher 21 aus, um den Niederdruckanschluss 41 zu versorgen (Phase 1) und es werden die ersten und zweiten Ventile 31, 32 geöffnet (Schritt 205), während die dritten und vierten Ventile 33, 34 geschlossen bleiben. Ist das Druckniveau $PG_1$ dagegen nicht größer als das erste Mindestdruckniveaus $P_{low}$, ist der Niederdruckspeicher 21 als entleert zu betrachten und die Versorgung des Motors 100 erfolgt in Phase 2, d.h. das dritte Ventil bzw. Bypass-Ventil 33 wird geöffnet, während das erste Ventil 31 geschlossen wird (Schritt 206). Somit werden beide Anschlüsse 41, 42 über den Hochdruckspeicher 22 versorgt, bis letzterer ebenfalls entleert ist. Nach Schaltung der entsprechenden Ventile 31, 32, 33 (Schritt 205 oder 206) wird der Motor 100 gestartet (Schritt 207) und dieser mit den entsprechenden Einspritzdrücken versorgt. Die Überprüfung der Druckniveaus $PG_1$ und $PG_2$ kann gleichzeitig erfolgen.

Während des Motorbetriebs werden regelmäßig die Drücke $PG_1$ und $PG_2$ erfasst und mit den entsprechenden Grenzwerten $P_{low}$ und $P_{high}$ verglichen, je nachdem, in welcher Phase sich das System befindet (Schritt 208). Erfolgt die Versorgung in Phase 1, wird das Druckniveau $PG_1$ überwacht (Schritt 209). Fällt der Druck $PG_1$ auf oder unter das erste Mindestdruckniveau $P_{low}$ (Niederdruckspeicher 21 entleert), wird in Phase 2 übergegangen und das dritte Ventil 33 geöffnet sowie das erste Ventil 31 geschlossen (Schritt 210). Erfolgt die Versorgung in Phase 2, wird das Druckniveau $PG_2$ überwacht (Schritt 211). Fällt der Druck $PG_2$ auf oder unter das zweite Mindestdruckniveau $P_{high}$ (Hochdruckspeicher 22 entleert), wird der Motor 100 gestoppt (Schritt 212), da durch die Speichervorrichtung 10 nicht mehr die beiden geforderten Einspritzdrücke bereitgestellt werden kann.

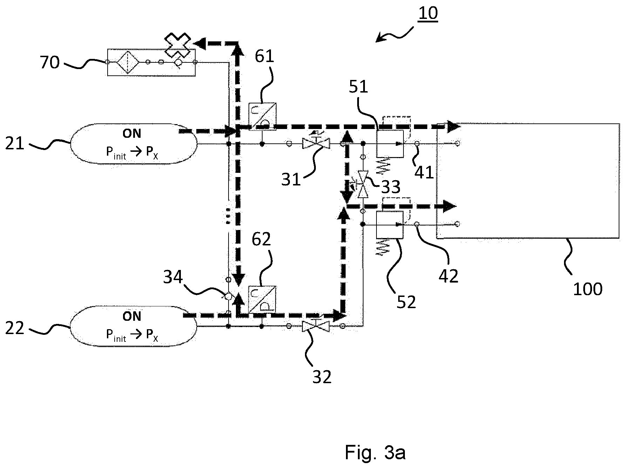

Die Figuren 3a-b zeigen ein zweites Ausführungsbeispiel, wobei die Speichervorrichtung 10 wie diejenige des ersten Ausführungsbeispiels aufgebaut ist. Allerdings unterscheiden sich die Schaltstellungen der Ventile 31, 32, 33 in den ersten und zweiten Phasen der Versorgung des Verbrauchers. Bei diesem Ausführungsbeispiel versorgen in einer ersten Phase die Nieder- und Hochdruckspeicher 21, 22 gemeinsam beide Anschlüsse 41, 42 bis zu einem definierten Zwischendruckniveau $P_X$.

Die erste Phase ist in der Figur 3a dargestellt. Diese zeichnet sich dadurch aus, dass das vom ersten Drucksensor 61 erfasste Druckniveau $PG_1$ oberhalb des definierten Zwischendruckniveaus $P_X$ liegt. Alternativ könnte auch das vom zweiten Drucksensor 62 erfasste zweite Druckniveau $PG_2$ betrachtet werden. Das Zwischendruckniveau $P_X$ liegt oberhalb des zweiten Mindestdruckniveaus $P_{high}$ und hängt von der Auslegung der Speichervorrichtung 10 (z.B. der Kapazitäten der Nieder- und Hochdruckspeicher 21, 22, der Auslegung der ersten und zweiten Ventile 31, 32 sowie den Werten der Mindestdruckniveaus $P_{low}$, $P_{high}$) ab. Alle schaltbaren Ventile 31, 32, 33 sind geöffnet, sodass der Druck im Niederdruckbereich und im Hochdruckbereich ausgeglichen ist und beide Anschlüsse 41, 42 gemeinsam versorgt werden.

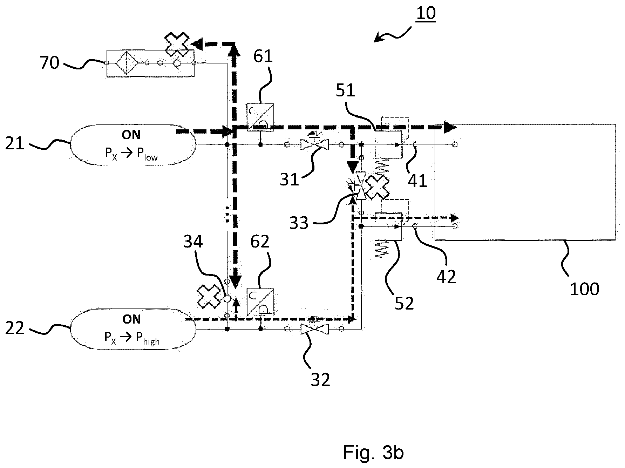

Erreicht der Systemdruck das definierte Zwischendruckniveau $P_X$, wird in die zweite Phase übergegangen (siehe Figur 3b) und das dritte Ventil 33 geschlossen. Dadurch ergibt sich die Schaltstellung der ersten Phase gemäß dem ersten Ausführungsbeispiel (vgl. Figur 2c). Der Niederdruckanschluss 41 wird nur vom Niederdruckspeicher 21 versorgt und letzterer bis zum ersten Mindestdruckniveau $P_{low}$ entleert. Der Hochdruckanschluss 42 wird getrennt davon nur vom Hochdruckspeicher 22 versorgt und letzterer bis zum zweiten Mindestdruckniveau $P_{high}$ entleert. Das Zwischendruckniveau $P_X$ ist vorzugsweise so gewählt, dass der Niederdruckspeicher 21 und der Hochdruckspeicher 22 gleichzeitig ihre jeweiligen Mindestdruckniveaus $P_{low}$, $P_{high}$ erreichen.

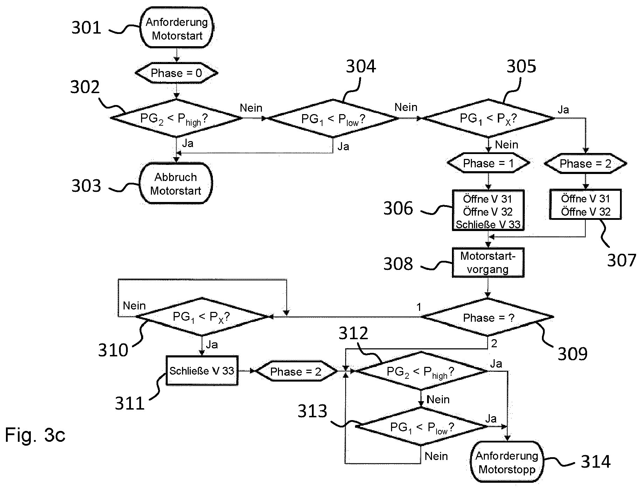

Die Figur 3c zeigt anhand eines Flussdiagramms ein Ausführungsbeispiel für ein mit der Speichervorrichtung der Figuren 3a-b durchführbares Verfahren zum Betrieb des als Gasmotor ausgebildeten Verbrauchers 100.

Nach einer Anforderung eines Motorstarts (Schritt 301) wird überprüft (insbesondere von der zuvor genannten Steuereinheit), ob das Druckniveau $PG_2$ oberhalb des zweiten Mindestdruckniveaus $P_{high}$ liegt (Schritt 302). Falls nein, ist die Speichervorrichtung 10 bzw. der Hochdruckspeicher 22 als entleert zu betrachten und der Motorstart wird abgebrochen (Schritt 303). Falls ja, wird geprüft, ob das Druckniveau $PG_1$ oberhalb des ersten Mindestdruckniveaus $P_{low}$ liegt (Schritt 304). Falls nein, wird der Motorstopp ebenfalls abgebrochen (Schritt 303). Falls ja, wird geprüft, ob das Druckniveau $PG_1$ oberhalb des definierten Zwischendruckniveaus $P_X$ liegt (Schritt 305). Ist dies der Fall, erfolgt die Versorgung anhand der in der Figur 3a dargestellten Phase 1, d.h. die Ventile 31 und 32 sind geöffnet und das Ventil 33 ist geschlossen (Schritt 306). Liegt das Druckniveau $PG_1$ nicht oberhalb des definierten Zwischendruckniveaus $P_X$, erfolgt die Versorgung anhand der in der Figur 3b dargestellten Phase 2, d.h. die Ventile 31, 32 sind geöffnet während die Ventile 33, 34 geschlossen sind (Schritt 307). Nach Schaltung der entsprechenden Ventile 31, 32, 33 (Schritt 306 oder 307) wird der Motor 100 gestartet (Schritt 308) und dieser mit den entsprechenden Einspritzdrücken versorgt. Die Überprüfung der Druckniveaus $PG_1$ und $PG_2$ kann gleichzeitig erfolgen.

Während des Motorbetriebs werden regelmäßig die Drücke $PG_1$ und $PG_2$ erfasst und mit den entsprechenden Grenzwerten $P_X$, $P_{low}$ und $P_{high}$ verglichen, je nachdem, in welcher Phase sich das System befindet (Schritt 309). Erfolgt die Versorgung in Phase 1, wird das Druckniveau $PG_1$ überwacht (Schritt 310). Fällt der Druck $PG_1$ auf oder unter das Zwischendruckniveau $P_X$, wird in Phase 2 übergegangen und das dritte Ventil 33 geschlossen (Schritt 311). In Phase 2 wird das Druckniveau $PG_2$ darauf überwacht, ob es oberhalb des zweiten Mindestdruckniveaus $P_{high}$ liegt (Schritt 312). Fällt der Druck $PG_2$ auf oder unter das zweite Mindestdruckniveau $P_{high}$ (Hochdruckspeicher 22 entleert), wird der Motor 100 gestoppt (Schritt 314), da der Hochdruckanschluss 42 nicht mehr mit dem erforderlichen Einspritzdruck versorgt werden kann. Zudem wird das Druckniveau $PG_1$ darauf überwacht, ob es oberhalb des ersten Mindestdruckniveaus $P_{low}$ liegt (Schritt 313). Fällt der Druck $PG_1$ auf oder unter das erste Mindestdruckniveau $P_{low}$ (Niederdruckspeicher 21 entleert), wird der Motor 100 gestoppt (Schritt 314), da der Niederdruckanschluss 41 nicht mehr mit dem erforderlichen Einspritzdruck versorgt werden kann.

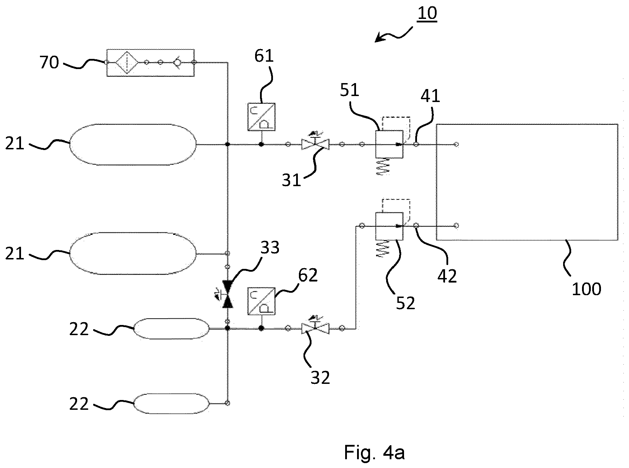

In den Figuren 4a-c ist ein drittes Ausführungsbeispiel der erfindungsgemäßen Speichervorrichtung 10 gezeigt. Im Unterschied zu den ersten beiden Ausführungsbeispielen sind die Druckminderer 51, 52 bzw. die Anschlüsse 41, 42 nicht über ein Bypass-Ventil miteinander verbunden. Darüber hinaus sind die Nieder- und Hochdruckspeicher 21, 22 nicht über ein Rückschlagventil, sondern über ein schaltbares drittes Ventil 33 miteinander verbunden, d.h. die Nieder- und Hochdruckbereiche können aktiv (insbesondere durch Ansteuerung des dritten Ventils 33 über eine Steuereinheit) voneinander getrennt oder miteinander verbunden werden. In dem hier gezeigten Ausführungsbeispiel sind zwei Niederdruckspeicher 21 und zwei Hochdruckspeicher 22 vorgesehen. Allerdings können jeweils eine andere Zahl von Nieder- und/oder Hochdruckspeichern 21, 22 zum Einsatz kommen (d.h. nur einer oder mehr als zwei). Darüber hinaus weisen die Nieder- und die Hochdruckspeicher 21, 22 in diesem Ausführungsbeispiel unterschiedliche Kapazitäten auf. In einer alternativen Ausführungsform könnte das dritte Ventil 33 als Rückschlagventil ausgebildet sein. Auch eine Ausgestaltung als manuell schaltbares Absperrventil ist prinzipiell denkbar.

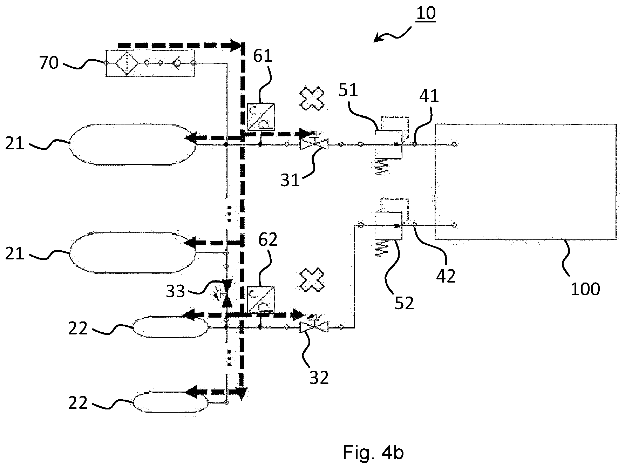

In der Figur 4b ist wiederum der Befüllvorgang über den gemeinsamen Gaseinlass 70 gezeigt. Hierzu sind die ersten und zweiten Ventile 31, 32 geschlossen, während das dritte Ventil 33 geöffnet ist.

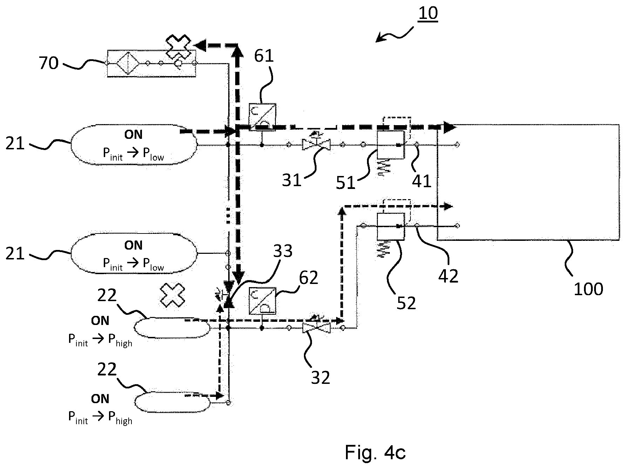

Die Versorgung des Verbrauchers 100 erfolgt nur in einer einzigen Phase, welche in der Figur 4c dargestellt ist. Die ersten und zweiten Ventile 31, 32 sind geöffnet, während das dritte Ventil 33 geschlossen ist. Somit wird der Niederdruckanschluss 41 nur über die Niederdruckspeicher 21 und der Hochdruckanschluss 42 getrennt davon nur über die Hochdruckspeicher 22 versorgt. Fällt das über den ersten Drucksensor 61 erfasste Druckniveau $PG_1$ auf oder unter das erste Mindestdruckniveau $P_{low}$ oder fällt das über den zweiten Drucksensor 62 erfasste Druckniveau $PG_2$ auf oder unter das zweite Mindestdruckniveau $P_{high}$, ist die Speichervorrichtung 10 entleert. Die Speicher 21, 22 sind vorzugsweise so ausgelegt (über deren Anzahl und/oder Kapazität), dass der Verbraucher 100 optimal versorgt wird und insbesondere die Niederdruckspeicher 21 und die Hochdruckspeicher 22 gleichzeitig leer sind.

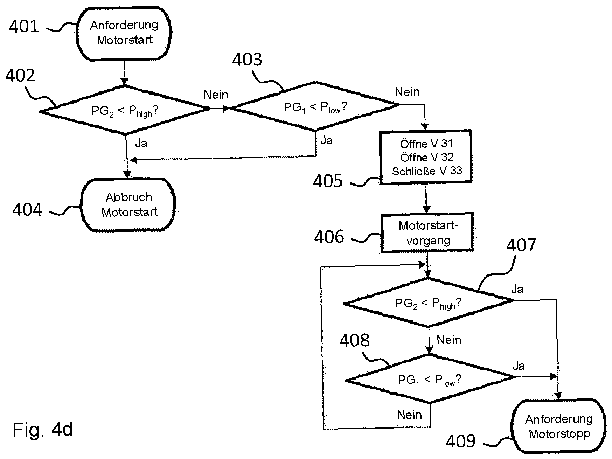

Die Figur 4d zeigt anhand eines Flussdiagramms ein Ausführungsbeispiel für ein mit der Speichervorrichtung der Figuren 4a-c durchführbares Verfahren zum Betrieb des als Gasmotor ausgebildeten Verbrauchers 100.

Nach einer Anforderung eines Motorstarts (Schritt 401) wird überprüft (insbesondere von der zuvor genannten Steuereinheit), ob das Druckniveau $PG_2$ oberhalb des zweiten Mindestdruckniveaus $P_{high}$ liegt (Schritt 402) und ob das Druckniveau $PG_1$ oberhalb des ersten Mindestdruckniveaus $P_{low}$ liegt (Schritt 403). Ist das jeweilige Mindestdruckniveau $P_{low}$, $P_{high}$ im Niederdruckbereich oder im Hochdruckbereich erreicht, ist die Speichervorrichtung 10 als entleert zu betrachten und der Motorstart wird abgebrochen (Schritt 404). Liegt sowohl das Druckniveau $PG_1$ oberhalb des ersten Mindestdruckniveaus $P_{low}$, als auch das Druckniveau $PG_2$ oberhalb des ersten Mindestdruckniveaus $P_{high}$, erfolgt die Versorgung des Motors 100 wie in der Figur 4c dargestellt, d.h. die Ventile 31, 32 sind geöffnet und das Ventil 33 ist geschlossen (Schritt 405). Nach Schaltung der entsprechenden Ventile 31, 32, 33 wird der Motor 100 gestartet (Schritt 406) und dieser mit den entsprechenden Einspritzdrücken versorgt. Die Überprüfung der Druckniveaus $PG_1$ und $PG_2$ kann gleichzeitig erfolgen.

Während des Motorbetriebs werden regelmäßig die Drücke $PG_1$ und $PG_2$ erfasst und mit den entsprechenden Mindestdruckniveaus $P_{low}$ und $P_{high}$ verglichen (Schritte 407 und 408). Fällt der Druck $PG_1$ auf oder unter das erste Mindestdruckniveau $P_{low}$ oder fällt der Druck $PG_2$ auf oder unter das zweite Mindestdruckniveau $P_{high}$, wird der Motor 100 gestoppt (Schritt 409), da der entsprechende Anschluss 41, 42 nicht mehr mit dem erforderlichen Einspritzdruck versorgt werden kann.

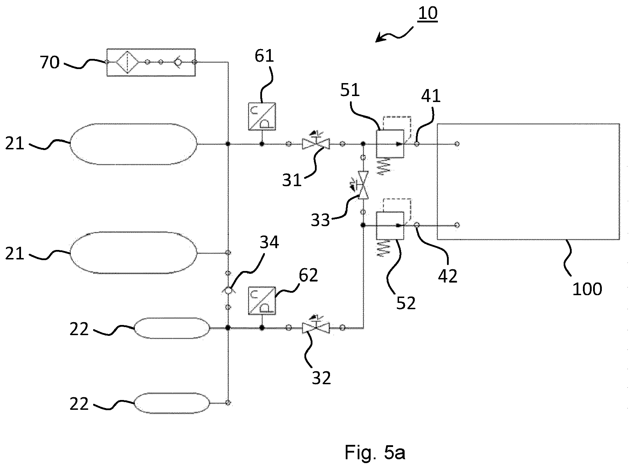

In den Figuren 5a-d ist ein viertes Ausführungsbeispiel der erfindungsgemäßen Speichervorrichtung 10 gezeigt. Dieses Ausführungsbeispiel stellt eine Kombination der Speichervorrichtungen 10 der vorherigen Ausführungsbeispiele dar. Die Speichervorrichtung 10 ist bis auf die Gasspeicher 21, 22 wie diejenige der ersten beiden Ausführungsbeispiele aufgebaut, d.h. es ist ein drittes Ventil 33 als Bypass-Ventil sowie ein Rückschlagventil als viertes Ventil 34 vorgesehen (vgl. Figur 5a). In diesem Ausführungsbeispiel sind jeweils zwei Niederdruckspeicher 21 und zwei Hochdruckspeicher 22 vorgesehen (die Anmerkungen zu deren Anzahl und Auslegung bzgl. des dritten Ausführungsbeispiels gelten für dieses Ausführungsbeispiel analog).

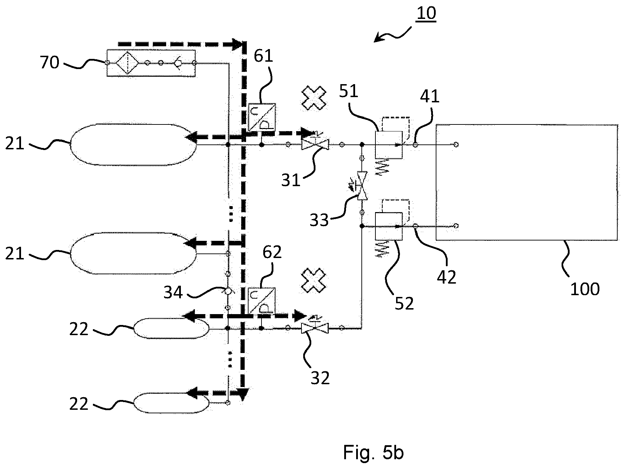

In der Figur 5b ist wiederum der Befüllvorgang über den gemeinsamen Gaseinlass 70 gezeigt. Hierzu sind die ersten und zweiten Ventile 31, 32 geschlossen, vorzugsweise ebenfalls das dritte Ventil 33. Durch den Druck des über den Gaseinlass 70 eingeleiteten Gases ist das Rückschlagventil 34 geöffnet.

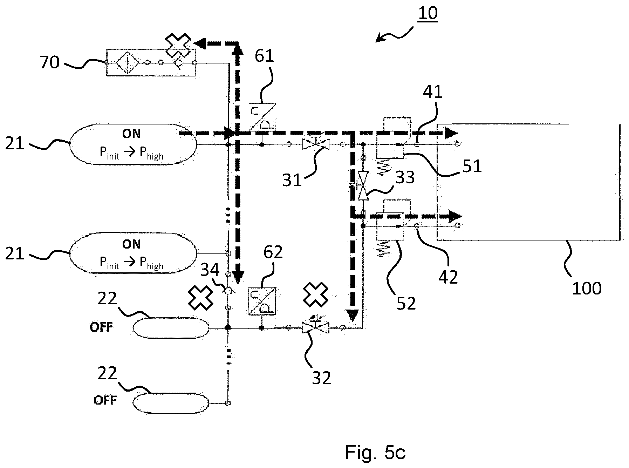

Die Figuren 5c-d zeigen zwei Phasen des Versorgungsbetriebs der Speichervorrichtung 10 für den Verbraucher 100, welcher es ermöglicht, dass die Niederdruckspeicher 21 bis zum niedrigeren ersten Mindestdruckniveau $P_{low}$ entleert werden können als die Hochdruckspeicher 22, welche bis zum höheren zweiten Mindestdruckniveau $P_{high}$ entleert werden.

Die erste Phase ist in der Figur 5c dargestellt. Beide Anschlüsse 41, 42 werden nur über die Niederdruckspeicher 21 versorgt. Hierzu ist das zweite Ventil 32 geschlossen. Durch die Druckdifferenz zwischen den Nieder- und Hochdruckbereichen ist auch das Rückschlagventil 34 geschlossen. Die Hochdruckspeicher 22 werden somit nicht entleert. Die Versorgung über die Niederdruckspeicher 21 erfolgt so lange, bis das vom ersten Drucksensor 61 gemessene Druckniveau $PG_1$ (d.h. der im Niederdruckbereich herrschende Druck) das zweite Mindestdruckniveau $P_{high}$ für den Hochdruckanschluss 42 erreicht.

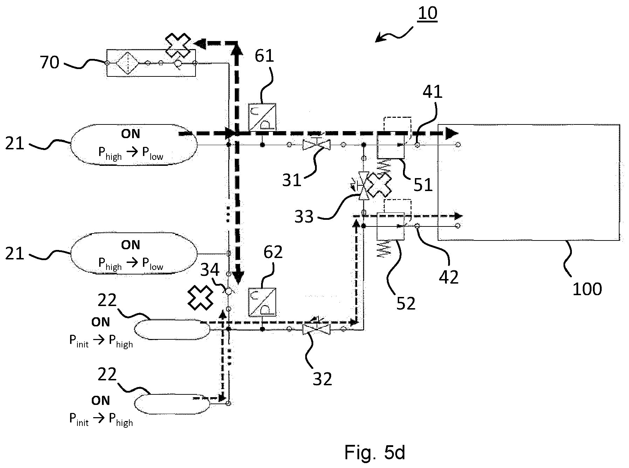

Sodann geht die Speichervorrichtung 10 in die zweite Phase über (siehe Figur 5d), in der die Niederdruckspeicher 21 ausgehend vom Druck $P_{high}$ bis zum ersten Mindestdruckniveau $P_{low}$ und die Hochdruckspeicher 22 ausgehend vom Initialdruck $P_{init}$ bis zum zweiten Mindestdruckniveau $P_{high}$ entleert werden. Hierzu wird das zweite Ventil 32 geöffnet und das dritte Ventil 33 geschlossen, sodass zwei getrennte Versorgungskreise vorliegen (aufgrund der Druckdifferenz ist das Rückschlagventil 34 weiterhin geschlossen). Fällt das über den ersten Drucksensor 61 erfasste Druckniveau $PG_1$ auf oder unter das erste Mindestdruckniveau $P_{low}$ oder fällt das über den zweiten Drucksensor 62 erfasste Druckniveau $PG_2$ auf oder unter das zweite Mindestdruckniveau $P_{high}$, ist die Speichervorrichtung 10 entleert. Die Gasspeicher 21, 22 sind vorzugsweise so ausgelegt (über deren Anzahl und/oder Kapazität), dass der Verbraucher 100 optimal versorgt wird und insbesondere die Niederdruckspeicher 21 und die Hochdruckspeicher 22 gleichzeitig leer sind. Wiederum sind die ersten und zweiten Ventile 31, 32 und/oder die ersten und zweiten Druckminderer 51, 52 vorzugsweise so ausgelegt, dass der Massenstrom durch das zweite Ventil 32 kleiner ist als der Massenstrom durch das erste Ventil 31, sodass das Rückschlagventil 34 aufgrund der sich daraus ergebenden Druckdifferenz geschlossen bleibt.

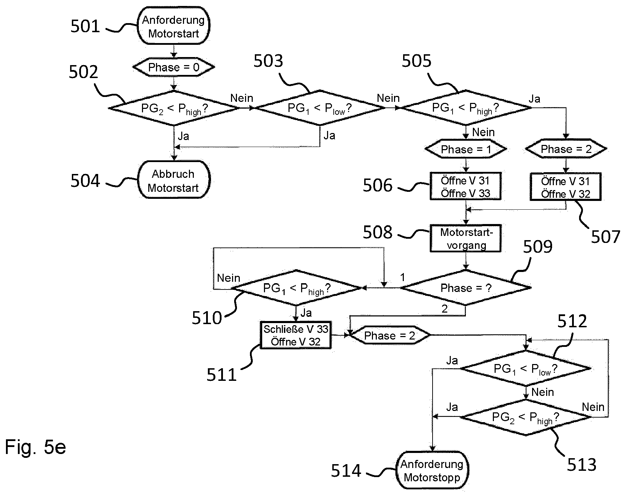

Die Figur 5e zeigt anhand eines Flussdiagramms ein Ausführungsbeispiel für ein mit der Speichervorrichtung der Figuren 5a-d durchführbares Verfahren zum Betrieb des als Gasmotor ausgebildeten Verbrauchers 100.

Nach einer Anforderung eines Motorstarts (Schritt 501) wird überprüft (insbesondere von der zuvor genannten Steuereinheit), ob das Druckniveau $PG_2$ oberhalb des zweiten Mindestdruckniveaus $P_{high}$ liegt (Schritt 502) und ob das Druckniveau $PG_1$ oberhalb des ersten Mindestdruckniveaus $P_{low}$ liegt (Schritt 503). Ist das jeweilige Mindestdruckniveau $P_{low}$, $P_{high}$ im Niederdruckbereich oder im Hochdruckbereich erreicht, ist die Speichervorrichtung 10 als entleert zu betrachten und der Motorstart wird abgebrochen (Schritt 504). Liegen die Druckniveaus $PG_1$ und $PG_2$ oberhalb der jeweiligen Mindestdruckniveaus $P_{low}$, $P_{high}$, so hängt die Art der Versorgung des Verbrauchers 100 davon ab, ob das Druckniveau $PG_1$ im Niederdruckbereich größer oder kleiner als (bzw. gleich dem) zweiten Mindestdruckniveau $P_{high}$ ist (Schritt 505). Liegt $PG_1$ oberhalb von $P_{high}$, so erfolgt die Versorgung gemäß der in der Figur 5c dargestellten Phase 1, d.h. die ersten und dritten Ventile 31, 33 sind geöffnet, während die zweiten und vierten Ventile 32, 34 geschlossen sind (Schritt 506). Die Niederdruckspeicher 21 werden dann bis zum zweiten Mindestdruckniveau $P_{high}$ entleert. Andernfalls erfolgt die Versorgung gemäß der in der Figur 5d dargestellten Phase 2, d.h. die ersten und zweiten Ventile 31, 32 sind geöffnet, während das dritte Ventil 33 (ebenso wie das vierte Ventil 34) geschlossen sind (Schritt 507). Nach Schaltung der entsprechenden Ventile 31, 32, 33 (Schritt 506 oder 507) wird der Motor 100 gestartet (Schritt 508) und dieser mit den entsprechenden Einspritzdrücken versorgt. Die Überprüfung der Druckniveaus $PG_1$ und $PG_2$ kann gleichzeitig erfolgen.

Während des Motorbetriebs werden regelmäßig die Drücke $PG_1$ und $PG_2$ erfasst und mit den entsprechenden Grenzwerten $P_{low}$ und $P_{high}$ verglichen, je nachdem, in welcher Phase sich das System befindet (Schritt 509). Erfolgt die Versorgung in Phase 1, wird das Druckniveau $PG_1$ überwacht (Schritt 510). Fällt der Druck $PG_1$ auf oder unter das zweite Mindestdruckniveau $P_{high}$, wird in Phase 2 übergegangen und das zweite Ventil 32 geöffnet sowie das dritte Ventil 33 geschlossen (Schritt 511). In Phase 2 wird einerseits das Druckniveau $PG_1$ darauf überwacht, ob es oberhalb des ersten Mindestdruckniveaus $P_{low}$ liegt (Schritt 512) und andererseits das Druckniveau $PG_2$ darauf überwacht, ob es oberhalb des zweiten Mindestdruckniveaus $P_{high}$ liegt (Schritt 513). Fällt der Druck $PG_1$ im Niederdruckbereich auf oder unter das erste Mindestdruckniveau $P_{low}$ (Niederdruckspeicher 21 entleert) oder fällt der Druck $PG_2$ im Hochdruckbereich auf oder unter das zweite Mindestdruckniveau $P_{high}$ (Hochdruckspeicher 22 entleert), wird der Motor 100 gestoppt (Schritt 514), da die Anschlüsse 41, 42 nicht mehr nicht mehr beide mit dem jeweils erforderlichen Einspritzdruck versorgt werden können.

**Bezugszeichenliste:**

| 1 | Gasspeicher |
|---|---|
| 2 | Gasspeicher |
| 3 | Ventil |
| 4 | Druckminderventil |
| 5 | Druckminderventil |
| 6 | Drucksensor |
| 7 | Gaseinlass |
| 8 | Niederdruckanschluss |
| 9 | Hochdruckanschluss |
| 10 | Speichervorrichtung |
| 21 | Niederdruckspeicher |
| 22 | Hochdruckspeicher |
| 31 | Erstes Ventil |
| 32 | Zweites Ventil |
| 33 | Drittes Ventil |
| 34 | Viertes Ventil |
| 41 | Niederdruckanschluss |
| 42 | Hochdruckanschluss |
| 51 | Erstes Druckminderventil |
| 52 | Zweites Druckminderventil |
| 61 | Erster Drucksensor |
| 62 | Zweiter Drucksensor |
| 70 | Gaseinlass |
| 100 | Verbraucher |
| $P_{low}$ | Erstes Mindestdruckniveau bzw. Gasdruckniveau (niedrigerer Einspritzdruck) |

$P_{high}$     Zweites Mindestdruckniveau bzw. Gasdruckniveau (höherer Einspritzdruck)

$P_{init}$      Initialdruckniveau in der Speichervorrichtung nach dem Befüllen

$P_X$       Zwischendruckniveau

$PG_1$     Vom ersten Drucksensor erfasstes Druckniveau

$PG_2$     Vom zweiten Drucksensor erfasstes Druckniveau


**Patentansprüche**

1. Speichervorrichtung (10) zur Speicherung eines Gases und Versorgung eines Verbrauchers (100) mit unterschiedlichen Gasdruckniveaus, umfassend mindestens einen Niederdruckspeicher (21) und mindestens einen Hochdruckspeicher (22),
   **dadurch gekennzeichnet, dass**

   - der Niederdruckspeicher (21) über ein schaltbares erstes Ventil (31) mit einem Niederdruckanschluss (41) und der Hochdruckspeicher (22) über ein schaltbares zweites Ventil (32) mit einem Hochdruckanschluss (42) verbunden ist, wobei über den Hochdruckanschluss (42) einem angeschlossenen Verbraucher (100) ein höheres Gasdruckniveau ($P_{high}$) bereitstellbar ist als über den Niederdruckanschluss (41),
   - der Niederdruckanschluss (41) und der Hochdruckanschluss (42) über ein schaltbares drittes Ventil (33) miteinander verbunden sind,
   - der Niederdruckspeicher (21) und der Hochdruckspeicher (22) über ein viertes Ventil (34) miteinander verbunden sind, und
   - die Ventile (31, 32, 33) derart schaltbar sind, dass der Niederdruckspeicher (21) bis zu einem niedrigeren Mindestdruckniveau ($P_{low}$) entleerbar ist als der Hochdruckspeicher (22).

2. Speichervorrichtung (10) nach Anspruch 1, ferner umfassend ein mit dem Niederdruckanschluss (41) verbundenes erstes Druckminderventil (51) und ein mit dem Hochdruckanschluss (42) verbundenes zweites Druckminderventil (52), wobei das erste Druckminderventil (51) am Niederdruckanschluss (41) ein definiertes erstes Gasdruckniveau ($P_{low}$) bereitstellt, welches geringer ist als ein über das zweite Druckminderventil (52) am Hochdruckanschluss (42) bereitgestelltes zweites Gasdruckniveau ($P_{high}$).

3. Speichervorrichtung (10) nach Anspruch 1 oder 2, wobei das vierte Ventil (34) ein Rückschlagventil ist, welches einen zwischen dem Niederdruckspeicher (21) und dem ersten Ventil (31) gebildeten Niederdruckbereich von einem zwischen dem Hochdruckspeicher (22) und dem zweiten Ventil (32) gebildeten Hochdruckbereich trennt und eingerichtet ist, einen Gasfluss vom Hochdruckbereich in den Niederdruckbereich zu blockieren.

4. Speichervorrichtung (10) nach einem der vorhergehenden Ansprüche, wobei die Nieder- und Hochdruckspeicher (21, 22) mit einem gemeinsamen Gaseinlass (70) verbunden und über diesen gemeinsam mit Gas befüllbar sind, wobei das vierte Ventil (34) vorzugsweise eingerichtet ist, beim Befüllen mit Gas zu öffnen, insbesondere automatisch zu öffnen, und die Nieder- und Hochdruckspeicher (21, 22) gasleitend miteinander zu verbinden.

5. Speichervorrichtung (10) nach dem Oberbegriff des Anspruchs 1, wobei der Niederdruckspeicher (21) über ein schaltbares erstes Ventil (31) mit einem Niederdruckanschluss (41) und der Hochdruckspeicher (22) über ein schaltbares zweites Ventil (32) mit einem Hochdruckanschluss (42) verbunden ist, wobei über den Hochdruckanschluss (42) einem angeschlossenen Verbraucher (100) ein höheres Gasdruckniveau ($P_{high}$) bereitstellbar ist als über den Niederdruckanschluss (41), wobei der Niederdruckspeicher (21) und der Hochdruckspeicher (22) über ein drittes Ventil (33) miteinander verbunden sind und wobei die Ventile (31, 32, 33) derart schaltbar sind, dass der Niederdruckspeicher (21) bis zu einem niedrigeren Mindestdruckniveau ($P_{low}$) entleerbar ist als der Hochdruckspeicher (22).

6. Speichervorrichtung (10) nach dem vorhergehenden Anspruch, wobei der Niederdruckanschluss (41) und der Hochdruckanschluss (42) nur über das dritte Ventil (33) miteinander verbunden sind, wobei das dritte Ventil (33) insbesondere ein schaltbares Ventil oder ein Rückschlagventil ist.

7. Speichervorrichtung (10) nach einem der vorhergehenden Ansprüche, wobei in einem Niederdruckbereich zwischen dem Niederdruckspeicher (21) und dem ersten Ventil (31) ein erster Drucksensor (61) angeordnet ist, welcher das Druckniveau im Niederdruckbereich erfasst, und in einem Hochdruckbereich zwischen dem Hochdruckspeicher (22) und dem zweiten Ventil (32) ein zweiter Drucksensor (62) angeordnet ist, welcher das Druckniveau im Hochdruckbereich erfasst.

8. Speichervorrichtung (10) nach einem der vorhergehenden Ansprüche, ferner umfassend eine Steuereinheit, welche mit den ersten, zweiten und dritten Ventilen (31, 32, 33) verbunden und eingerichtet ist, diese unabhängig voneinander zu schalten, wobei die ersten, zweiten und dritten Ventile (31, 32, 33) vorzugsweise als Magnetventile ausgebildet sind.

9. Speichervorrichtung (10) den beiden vorhergehenden Ansprüchen, wobei die Steuereinheit mit den ersten und zweiten Drucksensoren (61, 62) verbunden und eingerichtet ist, die ersten, zweiten und dritten Ventile (31, 32, 33) in Abhängigkeit der über die Drucksensoren (61, 62) erfassten Drücke automatisch derart zu schalten, dass unter gleichzeitiger Druckversorgung der Nieder- und Hochdruckanschlüsse (41, 42) der Niederdruckspeicher (21) bis zu einem ersten Mindestdruckniveau ($P_{low}$) und der Hochdruckspeicher (22) bis zu einem zweiten Mindestdruckniveau ($P_{high}$) entleert wird, wobei das zweite Mindestdruckniveau ($P_{high}$) über dem ersten Mindestdruckniveau ($P_{low}$) liegt.

10. Speichervorrichtung (10) nach einem der vorhergehenden Ansprüche, wobei die ersten und zweiten Ventile (31, 32) und/oder die ersten und zweiten Druckminderventile (51, 52) derart ausgelegt sind, dass ein Gasfluss durch das erste Ventil (31) größer ist als ein Gasfluss durch das zweite Ventil (32).

11. Arbeitsgerät mit einer Speichervorrichtung (10) nach einem der vorhergehenden Ansprüche und einem Verbraucher (100), insbesondere einem gasbetriebenen Motor, welcher einen an den Niederdruckanschluss (41) der Speichervorrichtung (10) angeschlossenen Niederdruckeinlass und einen an den Hochdruckanschluss (42) der Speichervorrichtung (10) angeschlossenen Hochdruckeinlass besitzt, über die der Verbraucher (100) mit unterschiedlichen Gasdruckniveaus ($P_{low}$, $P_{high}$) versorgbar ist.

12. Verfahren zur Versorgung eines Verbrauchers (100), insbesondere eines gasbetriebenen Motors, mit unterschiedlichen Gasdruckniveaus mittels einer Speichervorrichtung (10) nach einem der Ansprüche 1 bis 10, wobei in einem Niederdruckbereich zwischen dem Niederdruckspeicher (21) und dem ersten Ventil (31) ein erster Druck ($P_{G1}$) und in einem Hochdruckbereich zwischen dem Hochdruckspeicher (22) und dem zweiten Ventil (32) ein zweiter Druck ($P_{G2}$) gemessen wird und in Abhängigkeit der gemessenen Drücke ($P_{G1}$, $P_{G2}$) die Ventile (31, 32, 33) derart geschaltet werden, dass der Niederdruckspeicher (21) bis zu einem ersten Mindestdruckniveau ($P_{low}$) und der Hochdruckspeicher (22) bis zu einem zweiten Mindestdruckniveau ($P_{high}$) entleert werden können, wobei das zweite Mindestdruckniveau ($P_{high}$) über dem ersten Mindestdruckniveau ($P_{low}$) liegt.

13. Verfahren nach Anspruch 12, wobei die Speichervorrichtung wenigstens die Merkmale gemäß Anspruch 1 aufweist, wobei die ersten und zweiten Ventile (31, 32) geöffnet und die dritten und vierten Ventile (33, 34) geschlossen sind, wenn der erste gemessene Druck ($P_{G1}$) größer ist als das erste Mindestdruckniveau ($P_{low}$), sodass der Niederdruckspeicher (21) bis zum ersten Mindestdruckniveau ($P_{low}$) entleert werden kann, wobei die zweiten und dritten Ventile (32, 33) geöffnet und die ersten und vierten Ventile (31, 34) geschlossen sind, wenn der erste gemessene Druck ($P_{G1}$) kleiner oder gleich dem ersten Mindestdruckniveau ($P_{low}$) ist, sodass der Hochdruckspeicher (22) unter vorzugsweise gleichzeitiger Versorgung der Nieder- und Hochdruckanschlüsse (41, 42) bis zum zweiten Mindestdruckniveau ($P_{high}$) entleert werden kann.

14. Verfahren nach Anspruch 12, wobei die Speichervorrichtung wenigstens die Merkmale gemäß Anspruch 1 aufweist, wobei die ersten, zweiten und dritten Ventile (31, 32, 33) geöffnet sind, wenn der erste gemessene Druck ($P_{G1}$) und/oder der zweite gemessene Druck ($P_{G2}$) größer ist als ein definiertes Zwischendruckniveau ($P_x$), welches insbesondere oberhalb des zweiten Mindestdruckniveaus ($P_{high}$) liegt, sodass die Nieder- und Hochdruckspeicher (21, 22) bis zum Zwischendruckniveau ($P_x$) entleert werden können, wobei die ersten und zweiten Ventile (31, 32) geöffnet und die dritten und vierten Ventile (33, 34) geschlossen sind, wenn der erste gemessene Druck ($P_{G1}$) und/oder der zweite gemessene Druck ($P_{G2}$) kleiner oder gleich dem Zwischendruckniveau ($P_x$) ist, sodass der Niederdruckspeicher (21) bis zum ersten Mindestdruckniveau ($P_{low}$) und der Hochdruckspeicher (22) bis zum zweiten Mindestdruckniveau ($P_{high}$) entleert werden können.

15. Verfahren nach Anspruch 12, wobei die Speichervorrichtung wenigstens die Merkmale gemäß Anspruch 1 aufweist, wobei die ersten und dritten Ventile (31, 33) geöffnet und die zweiten und vierten Ventile (32, 34) geschlossen sind, wenn der erste gemessene Druck ($P_{G1}$) größer ist als das zweite Mindestdruckniveau ($P_{high}$), sodass der Niederdruckspeicher (21) bis zum zweiten Mindestdruckniveau ($P_{high}$) entleert werden kann, wobei die ersten und zweiten Ventile (31, 32) geöffnet und die dritten und vierten Ventile (33, 34) geschlossen sind, wenn der erste gemessene Druck ($P_{G1}$) kleiner oder gleich dem zweiten Mindestdruckniveau ($P_{high}$) ist, sodass der Niederdruckspeicher (21) bis zum ersten Mindestdruckniveau ($P_{low}$) und der Hochdruckspeicher (22) bis zum zweiten Mindestdruckniveau

($P_{high}$) entleert werden können.

16. Verfahren nach Anspruch 12, wobei die Speichervorrichtung wenigstens die Merkmale gemäß Anspruch 5 aufweist, wobei die ersten und zweiten Ventile (31, 32) geöffnet sind und das dritte Ventil (33) geschlossen ist, sodass der Niederdruckspeicher (21) bis zum ersten Mindestdruckniveau ($P_{low}$) und der Hochdruckspeicher (22) bis zum zweiten Mindestdruckniveau ($P_{high}$) entleert werden können.

17. Verfahren nach einem der Ansprüche 12 bis 16, wobei die Versorgung des Verbrauchers (100) gestoppt wird, sobald bei voneinander gasdicht getrennten Nieder- und Hochdruckanschlüssen der erste gemessene Druck ($P_{G1}$) das erste Mindestdruckniveau (Piow) oder der zweite gemessene Druck ($P_{G2}$) das zweite Mindestdruckniveau ($P_{high}$) erreicht oder unterschreitet oder sobald bei miteinander gasleitend verbundenen Nieder- und Hochdruckanschlüssen der zweite gemessene Druck ($P_{G2}$) das zweite Mindestdruckniveau ($P_{high}$) erreicht oder unterschreitet.

Fig. 1a
(Stand der Technik)

Fig. 1b
(Stand der Technik)

**Fig. 1c**
**(Stand der Technik)**

Anforderung
Motorstart

PG < $P_{high}$?    — Nein →    Öffne V 3

Ja

Abbruch
Motorstart

Motorstartvorgang

Nein

PG < $P_{high}$?

Ja

Anforderung
Motorstopp

Fig. 1d
(Stand der Technik)

Fig. 2a

Fig. 2b

Fig. 2c

Fig. 2d

Fig. 2e

Fig. 3a

Fig. 3b

Fig. 3c

Fig. 4a

Fig. 4b

70

61

10

21　ON　$P_{init} \rightarrow P_{low}$

31　51　41

21　ON　$P_{init} \rightarrow P_{low}$

33

62

42

100

22

ON　$P_{init} \rightarrow P_{high}$

32

52

22

ON　$P_{init} \rightarrow P_{high}$

Fig. 4c

Fig. 4d

Fig. 5a

Fig. 5b

Fig. 5c

Fig. 5d

501 ⌇ Anforderung
Motorstart

502 ⌇

Phase = 0

503 ⌇

505 ⌇

PG$_2$ < P$_{high}$?  — Nein →  PG$_1$ < P$_{low}$?  — Nein →  PG$_1$ < P$_{high}$?  — Ja

Ja | Ja

Nein

Phase = 1

Phase = 2

504 ⌇ Abbruch
Motorstart

506 ⌇ Öffne V 31
Öffne V 33

Öffne V 31
Öffne V 32

507 ⌇

508 ⌇ Motorstartvorgang

509 ⌇

Nein

510 ⌇  PG$_1$ < P$_{high}$?  — 1 — Phase = ?

Ja | 2

511 ⌇ Schließe V 33
Öffne V 32

Phase = 2

512 ⌇

Ja

PG$_1$ < P$_{low}$?

Nein

Ja

PG$_2$ < P$_{high}$?  — Nein

513 ⌇

514 ⌇ Anforderung
Motorstopp

Fig. 5e

Europäisches
Patentamt

European
Patent Office

Office européen
des brevets

**EUROPÄISCHER RECHERCHENBERICHT**

**Nummer der Anmeldung**

EP 24 17 2353

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 9 506 417 B2 (FORD GLOBAL TECH LLC [US]) 29. November 2016 (2016-11-29) * Abbildung 2 * | 1-17 | INV. F17C7/00 |
| A | ----- WO 2023/025824 A1 (DELPHI TECH IP LTD [BB]; BORGWARNER FRANCE SAS [FR]) 2. März 2023 (2023-03-02) * Abbildung 2 * | 1-17 | ADD. F02M21/02 |
| A | ----- EP 2 312 145 B1 (HONDA MOTOR CO LTD [JP]) 11. Januar 2012 (2012-01-11) * Abbildung 1 * | 1-17 | |
| X | ----- CN 107 620 859 A (SHIJIAZHUANG ENRIC GAS EQUIPMENT CO LTD) 23. Januar 2018 (2018-01-23) | 1,2, 5-10,12, 16,17 | |
| A | * Abbildung 1 * | 3,11, 13-15 | |
| X | ----- CN 217 540 363 U (CHN ENERGY INVEST GROUP CO LTD; NAT INST CLEAN & LOW CARBON ENERGY) 4. Oktober 2022 (2022-10-04) | 1,2,4,5, 7,8,10 | **RECHERCHIERTE SACHGEBIETE (IPC)** |
| A | * Abbildung 1 * | 3,6,11 | F17C |
| X | ----- CN 115 628 401 A (BEIJING INST AEROSPACE TESTING TECH; CNOOC GAS & POWER GROUP CO LTD) 20. Januar 2023 (2023-01-20) | 1,2,4-8, 10,12, 16,17 | F02M |
| A | * Abbildung 1 * | 3,9,11, 13-15 | |
| A | ----- US 2017/023180 A1 (PETIT ROCK J [US] ET AL) 26. Januar 2017 (2017-01-26) * Abbildung 1 * ----- | 1-17 | |

Der vorliegende Recherchenbericht wurde für alle Patentansprüche erstellt

| Recherchenort | Abschlußdatum der Recherche | Prüfer |
|---|---|---|
| München | 23. September 2024 | Papagiannis, Michail |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 2353

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-09-2024

| Im Recherchenbericht angeführtes Patentdokument | Datum der Veröffentlichung | Mitglied(er) der Patentfamilie | Datum der Veröffentlichung |
|---|---|---|---|
| US 9506417 B2 | 29-11-2016 | CN 105041540 A | 11-11-2015 |
| | | DE 102015206740 A1 | 22-10-2015 |
| | | RU 2015114181 A | 10-11-2016 |
| | | US 2015300287 A1 | 22-10-2015 |
| WO 2023025824 A1 | 02-03-2023 | CN 117836510 A | 05-04-2024 |
| | | EP 4392659 A1 | 03-07-2024 |
| | | GB 2610176 A | 01-03-2023 |
| | | WO 2023025824 A1 | 02-03-2023 |
| EP 2312145 B1 | 11-01-2012 | AT E541118 T1 | 15-01-2012 |
| | | CN 102042126 A | 04-05-2011 |
| | | EP 2312145 A1 | 20-04-2011 |
| | | ES 2377713 T3 | 30-03-2012 |
| | | JP 5285569 B2 | 11-09-2013 |
| | | JP 2011085117 A | 28-04-2011 |
| | | KR 20110043474 A | 27-04-2011 |
| | | TW 201128060 A | 16-08-2011 |
| | | US 2011088811 A1 | 21-04-2011 |
| CN 107620859 A | 23-01-2018 | KEINE | |
| CN 217540363 U | 04-10-2022 | KEINE | |
| CN 115628401 A | 20-01-2023 | KEINE | |
| US 2017023180 A1 | 26-01-2017 | CA 2982830 A1 | 27-10-2016 |
| | | US 2017023180 A1 | 26-01-2017 |
| | | US 2021003255 A1 | 07-01-2021 |
| | | WO 2016172637 A1 | 27-10-2016 |

EPO FORM P0461

Für nähere Einzelheiten zu diesem Anhang : siehe Amtsblatt des Europäischen Patentamts, Nr.12/82